# EUROPEAN PATENT SPECIFICATION

(11) **EP 0 916 202 B1**
(45) Date of publication and mention of the grant of the patent: **29.08.2001**
(21) Application number: 98910176.1
(22) Date of filing: 04.03.1998
(51) Int. Cl.: H04J 3/14, H04J 3/12, H04Q 11/04

(54) **SYSTEM AND METHOD FOR DETERMINING END-TO-END CHARACTERISTICS OF A DATA COMMUNICATION CHANNEL**
SYSTEM UND VERFAHREN ZUR BESTIMMUNG DER END-ZU-END-EIGENSCHAFTEN EINES KOMMUNIKATIONSKANALS
SYSTEME ET PROCEDE PERMETTANT DE DETERMINER DES CARACTERISTIQUES DE BOUT EN BOUT D'UN CANAL DE COMMUNICATION DE DONNEES

(30) Priority: 07.03.1997 US 40487 P; 13.03.1997 US 816699
(43) Date of publication of application: 19.05.1999
(73) Proprietor: 3COM CORPORATION, Skokie, IL 60076-2999 (US)
(72) Inventor: DAVENPORT, Bert, A., Chicago, IL 60640 (US); RENKEL, James, A., Warrenville, IL 60555-3242 (US); JANKUS, Peter, P., Chicago, IL 60630 (US)
(74) Representative: Vossius, Volker, Dr.
(86) International application number: US9804271
(87) International publication number: WO9839866

(56) References cited:
- DE-C- 4 343 982
- GB-A- 1 417 627
- US-A- 4 161 627
- US-A- 4 730 302
- US-A- 5 398 234
- INGLE J F: "HOW TO DETECT FRAME SLIPS IN VOICEBAND PCM CHANNELS" DATA COMMUNICATIONS, vol. 17, no. 11, October 1988, NEW YORK, US, page 205/206, 209/210, 217/218, 221/222 XP000032541

## Description

### Copyright Authorization

A portion of the disclosure of this patent document contains material that is subject to copyright protection.

### Background of the Invention

The present invention relates to a method and apparatns for detecting characteristics of a communication channel. In particular, the present invention may be utilized to determine if a communication channel is digital end-to-end. For example, the present method and apparatus may determine whether an Integrated Services Digital Network ("ISDN") to ISDN connection is all digital. Alternatively, the present method and apparatus may determine whether an ISDN to T1/E1, or T1/E1 to T1/E1, connection is all digital. Impairments in the digital connection may also be detected by the apparatus and method of the present invention.

**GB 1 417 627** discloses a method of and an apparatus for testing digital-to-analog and analog-to-digital converters in a pulse code modulation (PCM) terminal, wherein a test signal is produced and fed in sequence through the two converters during synchronisation or signalling time slots, wherein the signal obtained at the output is compared with the test signal, and wherein a fault signal is produced if the two signals so compared are not in coincidence.

If the digital channel bank is not synchronized with the digital switch receiving the bit stream, then slips must occur, however, they should be infrequent on digital networks that have been properly synchronized. In **Ingle, J. F., "How to Detect Frame Slips in Voiceband PCM Channels", Data Communications, vol. 17, no. 11, October 1988, New York, NY, USA,** there is disclosed a technique for detecting PCM slips on a DS-1 PCM bit stream by identifying them as phase jumps on a sinusoidal test tone.

A method of and a system for generating digital signals is known from **US 4,161,627,** the signals simulating a periodic oscillation of selectable amplitude and possibly frequency.

**US 5,398,234** discloses a telephone termination system for multi-channel digital data signalling in which each data word includes a final control bit, data is assembled as frames each containing one data word for each channel. The system utilises the existing CAS (robbed bit or channel associate signalling) voice functions of a standard DS-1 chip set to detect the presence of a loop-back request on any channel by a processor interrupt.

For ISDN to ISDN connections, some known systems send digital data over a channel that is billed as analog. Such systems do not verify that the channel is actually digital before sending the data. Rather, such systems may simply follow the practice of "just trying" to blindly send digital data over what may be an analog link and "seeing" if it works. If the channel is believed to be digital, but is actually analog, the connection will fail.

For ISDN to T1/E1, or T1/E1 to T1/E1, connections, no known methods or apparatii provide high speed data transfer. If an ISDN to T1/E1, or T1/E1 to T1/E1, call is made with prior art systems, analog communication is typically provided (speeds up to 33.6 full-duplex). In accordance with standard industry practice, communication occurs as if only over an analog link.

Accordingly, it would be desirable to have an improved method and apparatus for determining characteristics of a communication channel.

### SUMMARY OF THE INVENTION

In accordance with the present invention, if the communication channel in an ISDN-to-ISDN connection is determined to be end-to-end digital, the data can be sent and billed as an analog call. In addition, if the communication channel is determined to be analog, then a second call attempt can be made requesting (and paying for) a digital call. Moreover, if an ISDN to T1/E1, or T1/E1 to T1/E1, connection is determined to be all digital, digital data transfer rates of up to 62.666 kbps/B channel full-duplex can be achieved utilizing the method and apparatus of the present invention.

It is an object of the present device and method to provide one or more of the following features or advantages:
Enable digital communication at up to 62.666 kbps full-duplex from ISDN to T1/E1, or T1/E1 to T1/E1;
Enable more robust and faster communication at up to 64kbps full-duplex from ISDN to ISDN (BRI--Basic Rate Interface or PRI--Primary Rate Interface) connections while being billed for an analog call;
Determine whether any point-to-point GSTN (General Switched Telephone Network) communication channel is digital end-to-end;
Determine whether any communication channel is digital end-to-end;
Determine whether a G.711 CODEC (Coder-Decoder) is in the network path;
Determine if robbed bit signaling is present and determine the position and number of the robbed bits on an all-digital network;
Determine whether the network requires a minimum "one's density;"
Determine whether one or more digital attenuator pads are present in the connection;
Use a scrambler to prevent the network from compressing the data;
Use zero byte suppression to communicate digitally over a link that converts 00 to 02;
Determine if one or more robbed bits are present in a communication channel; and/or
Determine where one or more robbed bits are located and use 100% of the remaining non-robbed bits for data.

### Description of the Drawings

Figure 1 is a block diagram showing a connection between two devices having digital connectivity to the telephone network.
Figure 2 is a block diagram showing a sequence of initial negotiations between the calling device and the answering device shown in Figure 1.
Figure 3 is a block diagram showing more fully the content of block FF in Figure 2.
Figure 4 is an expanded diagram of the contents of block SQA in Figure 2.
Figures 5A and 5B are an expanded diagram of the contents of block SP1 in Figure 2 and a tabular description of the contents, respectively.
Figure 6 is an expanded diagram of block E in Figure 2.
Figure 7 is a block diagram of a transmitter in the calling device and the answering device shown in Figure 1.

### Detailed Description of the Preferred Embodiment

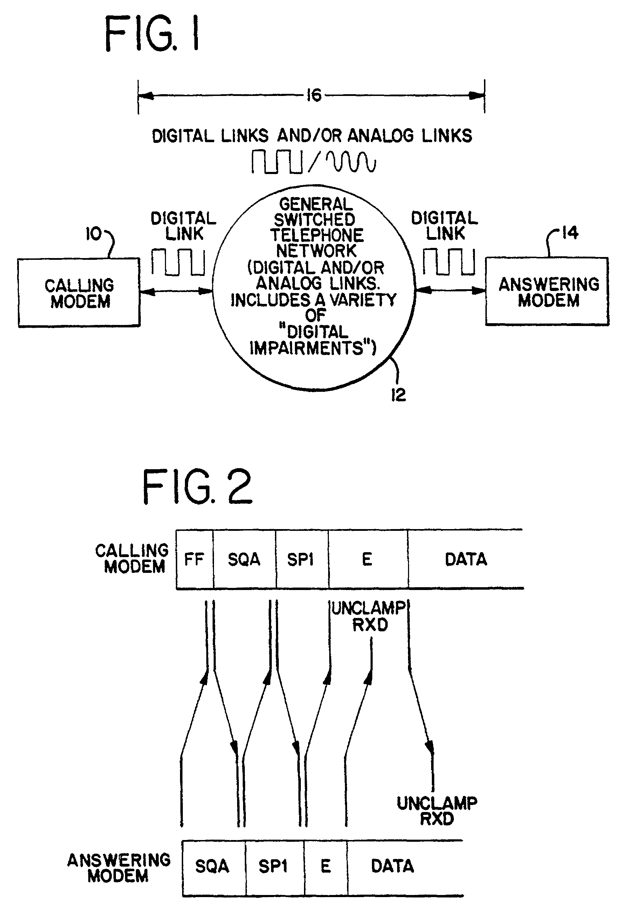

Figure 1 is a block diagram showing a connection between two devices having digital connectivity to the telephone network. A calling device 10 has a digital connection to the General Switched Telephone Network ("GSTN") 12. An answering device 14 also has a digital connection to the GSTN 12. At the beginning of a call between the calling device 10 and the answering device 14, certain characteristics of the GSTN are unknown.

Figure 2 shows the negotiation between the calling and answering devices 10 and 14 using the present system. The calling and answering devices are preferably modems. The following is a description of what each of the modems 10, 14 is doing during negotiation over data communication channel 16, as shown in Figure 1.

Figure 1 shows a calling device 10 communicating over a data communication line 16 with an answering device 14. The line 16 may or may not include an analog segment. The devices 10,14 utilize the present system to determine the characteristics of the line 16, including whether the line 16 is entirely digital or it includes an analog segment and whether the line includes any digital impairments.

As used herein, digital impairments refers to limitations on the content of the data sent over the line, such as robbed bit signaling (RBS) or a restricted channel. With an RBS impairment, the entity, such as a telephone company, operating the line utilizes the least significant bit of selected (e.g., every sixth) byte for overhead purposes. With a restricted channel (rather than a nonrestricted channels, the data sent over the line must have a minimum one's density: there is a limitation on the number of zeros that may validly be placed in a consecutive series. (In some telecommunication systems, such ones density is used to ensure synchronization.)

In addition to digital impairments, regulatory bodies may impose a limitation on the maximum power that may be carried by the line 16. Such power limitations may restrict the energy (in terms of power) that a modem may transmit/receive during various time intervals of predetermined length, such as 250 milliseconds or 3 seconds.

### Calling modem procedures

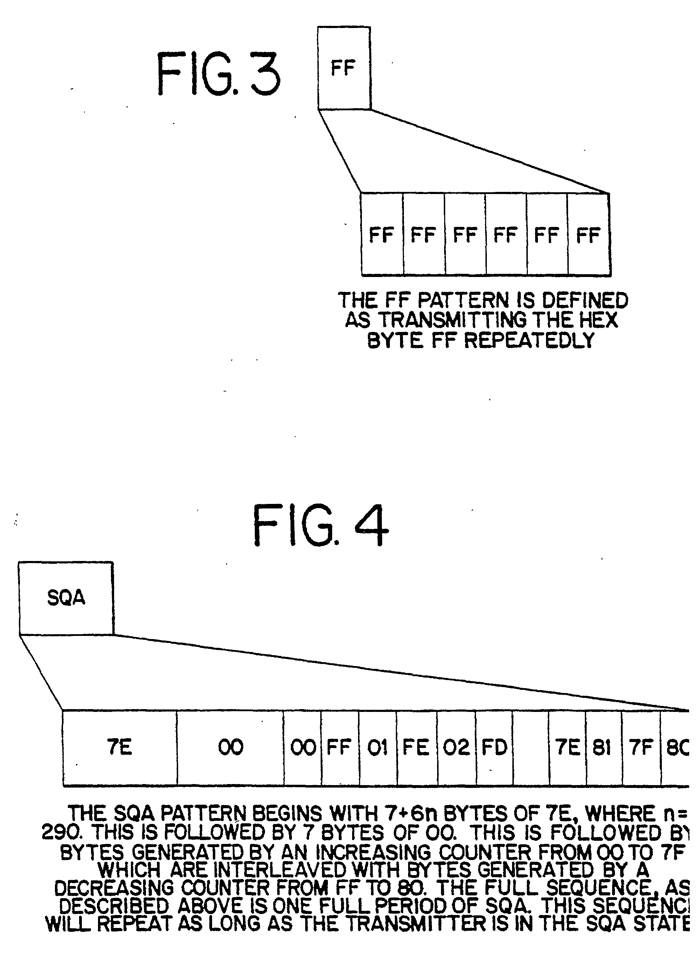

As shown in Figure 2, the calling modem will transmit all marks (bytes of FF hex) until it receives the SQA sequence from the answering modem. The composition of the SQA sequence is shown in Figure 4. The SQA sequence will allow the modem to determine the following:
Is the channel partially analog, or is it all digital?
If the channel is digital, what kinds of "digital impairments" does it contain?
How many and what are the locations of the RBS (robbed bit signaling) bits?
Is the channel restricted or unrestricted (i.e. does it have a minimum one's density requirement?
Does the channel have digital pads in it? If so, what kinds of pads are they?

Referring again to Figure 2, upon receiving the SQA sequence from the answering modem, the calling modem will transmit the SQA sequence until it receives the SP1 sequence from the answering modem.

The SQA sequence, or probing signal, is shown more fully in Figure 4. The sequence may thus be divided into three subparts: (1) 7+6n bytes of 7E, where n is preferably 290; (2) 7 bytes of 00, and (3) a sequence of digital codewords, which corresponds to an analog signal with a 4,000 Hz frequency, ½ the maximum allowable amplitude, and an increasing dc offset voltage. The digital codewords are preferably eight bit PCM codewords or PCM codes.

The first subpart of SQA, 7E in Figure 4, is a low power transmission. This allows the probing signal to meet the maximum power constraints imposed on the line by decreasing the average power transmitted during the SQA sequence. Also, the first subpart effectively "pads" the length of the probing signal, such that the length of the entire probing signal (all three subparts) is a multiple of 6 bytes. In this way, RBS may be more easily detected, since, in many environments, RBS occurs only in every sixth byte at DS0. Moreover, since the SQA sequence is known to the answering device and has a predetermined length, the location and number of robbed bits are determined from the SQA sequence.

The second subpart of SQA, 00 in Figure 4, is sent by the calling modem to test whether the line is a restricted channel or a clear channel. The answering modem effectively knows that if the received signal includes ones in the portion corresponding to the second subpart of the probing signal, the telephone company has probably inserted ones in order to maintain a minimum ones density in the transmitted data. Thus, in such a case, the channel is restricted.

There may be several different one's density requirements imposed by differing transmission technologies in the underlying DS1, DS2, DS3, etc. For example, a very restrictive requirement is that no single PCM codeword can contain all zeros. This effectively limits the number of consecutive zeros to seven in the same PCM codeword, or fourteen zeros across two consecutive PCM codewords.

This type of density restriction may be satisfied, along with all other density restrictions, by inserting a 1 after each string of at most seven consecutive zeros. It should be noted that, since the insertion is done before the data is inverted for transmission, this algorithm may be implemented by inserting a zero after each string of at most seven ones. It should further be noted that the "zero bit insertion/deletion" (ZBID) scheme used with HDLC/SDLC specifies insertion of a zero after six consecutive ones in the data stream to avoid false flag patterns (0, 6 ones, 0). The flag pattern was chosen to be distinguishable from an abort pattern (0, 7 or more ones) and the idle pattern (continuous ones).

Accordingly, if there is either robbed bit signalling present or a one's density requirement, data transfer occurs at rates below 64 Kbps, such as 56 Kbps. Conversely, if the are no robbed bits and no one's density requirement, i.e. a 64 Kbps clear channel, data transfer may occur at 64 Kbps. In accordance with the preferred embodiment, data transfer rates in excess of 56 Kbps may be achieved, even in the face of robbed bit signalling and a one's density requirement.

The increasing dc offset voltage in the third subpart of SQA, 00, FF, ... , 80 in Figure 4, ensures that, for example, where the line utilizes a 256 level quantizer, all 256 levels are utilized in transmitting the probing signal. The quantizer may be for example a µ-law quantizer, as is used in North America and Japan, or an A-law quantizer, as is used in Europe. In the digital domain, each of the quantizer levels may be represented by a different eight bit codeword. If the signal received by the answering device lacks the full range of the transmitted probing signal, the answering modem may effectively "know" of the digital coding system used in the line.

For example, the presence of a digital attenuator pad in the connection will cause the codewords in the third subpart of SQA to be adjusted in a fixed manner. The answering device, which knows what the third subpart should be, analyzes the received signal and may thereby identify the presence and characteristics of the pad.

The relatively high frequency and amplitude of the probe signal in the third subpart are difficult for an analog converter to translate. Indeed, in many telephone company lines, a filter substantially attenuates signals even approaching 4,000 Hz. If the received signal does not correspond to the transmitted probe signal, the answering modem may know that an analog segment lies in the line.

The total length of the probing signal used in the preferred embodiment is 256 bytes + 7 bytes + 7 bytes + (290 * 6), or 2010, bytes long. The answering device monitors, during the entire predetermined probing signal, to detect whether the received signal has the least significant bit different than the least significant bit of the probe signal. If so, the answering modem effectively knows that the telephone company line utilizes RBS. In one embodiment, the modems then simply know to communicate at 56 kbps rather than, for example, 64 kbps. In other embodiments, the modems simply do not send data in the least significant bit ("LSB") of any byte because of RBS. The data transmission speed of such modems is accordingly limited to a top speed of 56 kbps.

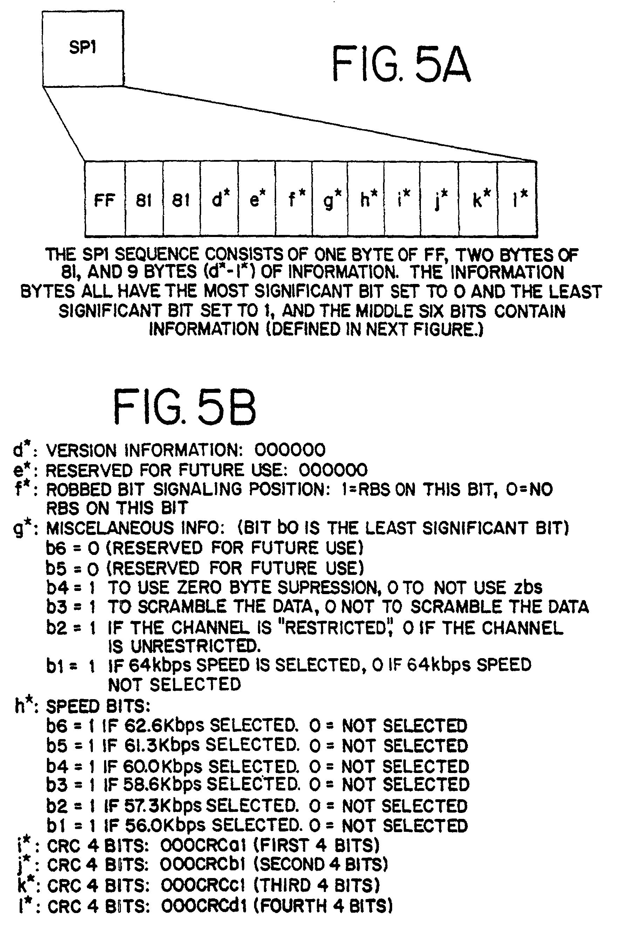

Figure 5 is an expanded diagram of the contents of block SP1 in Figure 2. The SP1 sequence is an indication of capabilities of the modem and a request to turn on or off various features and speeds in the modem. Upon receiving the SP1 sequence from the answering modem, the calling modem will transmit the SP1 sequence until it receives the E sequence.

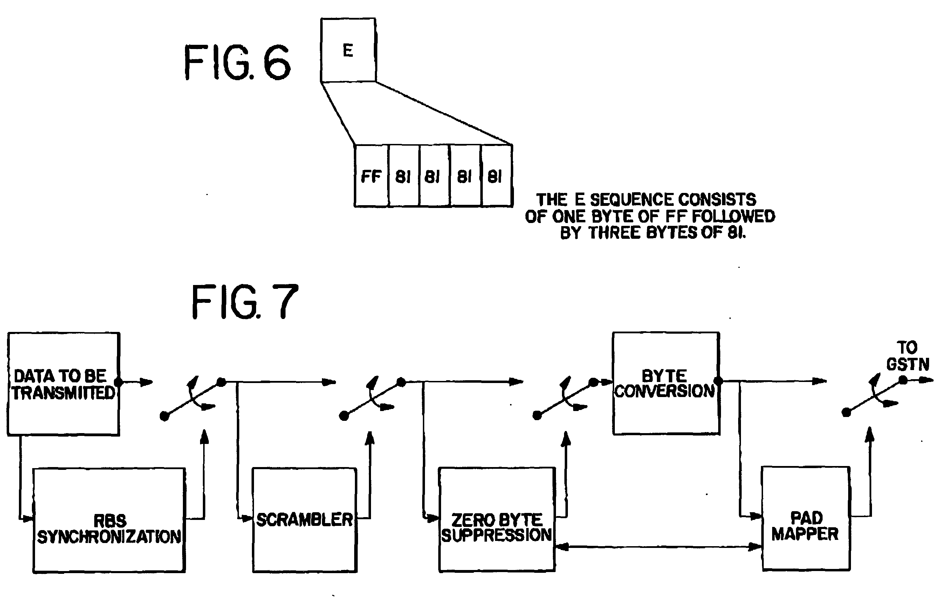

Figure 6 is an expanded diagram of block E in Figure 2. Upon receiving the E sequence from the answering modem, the calling modem will transmit the E sequence (fixed length of 5 bytes) followed by data. Upon receiving the data from the answering modem, the calling modem will unclamp its receive data and will proceed to receive data from the answering modem.

### Answering modem procedures:

The answering modem will transmit the SQA sequence until it receives the SQA sequence form the calling modem. The SQA sequence will allow the modem to determine the following:
Is the channel partially analog, or is it all digital?
If the channel is digital, what kinds of "digital impairments" does it contain?
How many and what are the locations of the RBS (robbed bit signaling) bits?
Is the channel restricted or unrestricted (i.e. does it have a minimum one's density requirements?
Does the channel have digital pads in it? If so, what kinds of pads are they?

Upon receiving the SQA sequence from the calling modem, the answering modem will transmit the SP1 sequence until it receives the SP1 sequence from the calling modem. The SP1 sequence is an indication of capabilities and of the modem and a request to turn on or off various features and speeds in the modem. Upon receiving the SP1 sequence from the calling modem, the answering modem will transmit the E sequence (fixed length of 5 bytes) followed by data. Upon receiving the data from the calling modem, the answering modem will unclamp its receive data and will proceed to receive data from the calling modem.

One aspect of the present system relates to the detection stage: by sending the SQA pattern, the present system has the ability to:
1) detect if the channel is digital end-to-end
2) detect the exact number and location of RBS
3) detect if digital pads are present (A pad is an adjustment of a digital signal, in one of a predetermined number of different ways, to emulate or mimic the attenuation that would have occurred if the signal had been sent on an analog line rather than a digital line. By noting the systematic padding of the probe signal, the modems may adjust their transmission characteristics to compensate for such padding).
4) detect if the channel is restricted/unrestricted (minimum l's density issues)
5) detect any digital impairments that we are currently unaware of (since the system sends all 256 codes).
6) detect all of these things without violating transmit power requirements of -15dBm transmit level measured over 3 seconds and 0dBm measured over 250ms.

Another aspect of the invention relates to the data phase: how can the modems may transmit the fastest possible speed given the impairments that are on the line/data communication channel. The present system has the ability to:
1) transmit over any end-to-end digital channel (throughout this specification, except whether context may require otherwise, the term transmit may also be used to mean receive or simply operate.")
2) transmit at speeds of 56K or faster (up to 64K) including intermediate speeds of 62,666bps, 61,333bps, 60,000bps, 58,666bps, 57,333bps. Many other systems can not transmit at these intermediate speeds. This is accomplished by sending 7 data bits/byte (+ I non-data bit) in any slot where a RBS bit is present and sending 8 data bits/byte in any slot where a RBS bit is not present.
3) transmit over digital channels that are restricted (i.e. they have a minimum one's density requirement). We do this with zero byte suppression: any time we get 7 0's in a row, insert a 1.
4) transmit over digital channels that have digital pads. We can do this by using a mapping scheme such that the receiver knows that transmitted codes get mapped into a different set of codes after the pad, so the receiver needs to "undo" this mapping. And, any codes that are doubly mapped (i.e. 2 or more transmitted codes get mapped into the same code after the pad) are not sent by the transmitter.
5) Prevent compression by the network: Sometimes the network will monitor the first 6 seconds of the call to see how compressible the data is, and if it is compressible, it will compress it. We prevent this by transmitting scrambled data which will look like wideband white noise.
6) Minimize overhead bits used by the zero byte suppresser. By scrambling the data into white noise, the number of bytes that require action by the zero byte suppresser are a controlled small number of bytes that is independent of the data that the user or protocol is sending.

The present method can determine the exact number and exact location of the RBS which allows faster data transmission than known methods. This is so because if there is just 1 bit robbed by RBS, the preferred method and apparatus described herein may transmit at up to 62,666bps. In fact, with any number or robbed bits between 1 and 5, the preferred method and apparatus provide data transfer rates in excess of 56 Kbps. In a typical network connection, 0-3 robbed bits may be encountered. Finding 4-6 robbed bits appears to be fairly rare.

With respect to the ones density requirement, the present system can detect if we need to avoid sending too many 0's in a row. We can compensate for this in several methods. First, we could just transmit at 56K (and set the LSB=1) which will fix the problem. Or, we could run the "zero byte suppresser" which is an algorithm that inserts a 1 into the data stream if it sees 7 0's in a row and we could run at a faster speed. Third, we could run a scrambler on the data which will make the number of times that we send too many zeros (and would make the zero byte suppresser kick in) very controlled (since the output is basically white noise).

The presently described system will detect the "digital impairment" of digital attenuator pads and could compensate for it, running at a reduced speed, but still running faster than an analog modem. Because the present system sends all 256 PCM codes, if there are any digital impairments that we are currently unaware of, it is very likely that we could detect and handle them with our current SQA sequence.

A typical digital network may see a transmitted data stream as being compressible. If, however, the transmitted data stream is compressed by the network, the data stream will likely be corrupted and the connection may fail. Use of a scrambler as described herein, on the other hand, makes the transmitted data stream appear as wide-band white noise (i.e. uncompressible). Therefore, the network will not compress the transmitted data stream.

In accordance with the presently preferred embodiment, where an ISDN to ISDN (basic rate or primary rate) connection is determined to be all digital, digital data transfer at rates up to 64kbps/B channel full-duplex can be achieved while the customer is billed for an analog call, which is typically billed at a lower rate than a customer would be billed for a digital call. If an ISDN to T1/E1, or T1/E1 to T1/E1, connection is determined to be all digital, digital data transfer rates of up to 62.666 kbps/B channel full-duplex can be achieved.

The method and apparatus of the present invention may be used in association with 56 Kbps, or higher, transmission speed modems, ISDN modems, and rack modem products. In addition, with the inclusion of a scrambler and a zero-byte suppresser, higher data rates can be achieved. With prior art, 56kbps maximum can be achieved over the channel. With current art, up to 64kbps can be achieved.

Finally, the present device provides added robustness to the communication. The scrambler and zero byte suppresser enable the communication to be successful in situations when the prior art would fail to connect.

The operation of a transmitter and a receiver will now be described with reference to Figure 7. Note that each block shown in Figure 7, except for Byte Conversion, may be turned on or off individually to meet the requirements of the particular network channel:

### RBS synchronization:

Each modem's transmitter is synchronized with the remote modem's receiver which is synchronized with the robbed bits in that particular network path (if any are present). The transmitter takes advantage of the fact that it knows if a robbed bit is present in each of the six possible time slots. Each time slot is 8 bits (one byte) long, and the six time slots are periodic i.e., if there is a robed bit in the first time slot, there will be a robbed bit in every sixth byte thereafter (in the same time slot) and these bits together we call "one robbed bit". So, there is a possibility of having from 0-6 robbed bits.

In any time slot where there is a robbed bit, the transmitter will only transmit 7 bits of user data. The 8^{th} bit will be forced to binary one and will be placed in the position of the robbed bit (this happens in the Byte Conversion routine). With this method, the 7 bits of user data will not be corrupted by the RBS, only the 8^{th} bit (not user data) will be corrupted.

In any time slot where there is not a robbed bit, the transmitter will transmit the full 8 bits of user data. These bits will not be corrupted by RBS because we know that it is not present in these time slots. Because we are synchronized with the robbed bit signaling (RBS) in the network and we know the exact number and location of the robbed bits, we can take full advantage of all available information bandwidth in the digital channel.

### Scrambler:

The scrambler takes the output of the previous section (which will be either 7 or 8 bits) and scrambles it using standard scrambling techniques to create wide-band white noise energy. In certain networks, the network will monitor the call for a duration of time to determine if the data is compressible. If it is, the network will compress the data. This would entirely corrupt the communication between two digital modems. To prevent the network from turning on the compressors, we can scramble the data. In addition, the scrambler will create a statistically controlled output which will minimize the output of the Zero Byte Suppresser.

### Zero Byte Suppression:

The zero byte suppresser takes the output from the previous section (which will be either 7 or 8 bits) and runs it through the following algorithm: If there are ever 7 bits of "binary zero" in a row, insert a "binary one" into the data stream. This algorithm ensures that minimum one's density requirements are met in the network. Note that this routine outputs the same number of bits that it received as an input and it buffers any additional data caused by the bit insertion. The buffered data is combined with the input of the next byte. If there is ever enough data buffered to transmit entirely out of the buffer, that action will be performed.

### Byte Conversion:

The byte conversion routine will output 8 bits of data. If its input was 8 bits, it passes the input data to its output without changing it. If its input was 7 bits, it will insert a "binary one" into the byte at the location where the robbed bit will be, and it will output the 8 bits.

### Pad Mapper:

The pad mapper takes the output from the previous section (which will be 8 bits) and it maps the data in such a way as to avoid sending any PCM codes that (due to the digital pad) would result in an ambiguous code at the receiver. Note that if the Zero Byte Suppression and the Pad Mapper are turned on at the same time, they will need to share information to ensure that their respective functions are achieved.

The final output is transmitted onto a digital link on the General Switched Telephone Network. The receiver of the remote modem will have knowledge of which of the above blocks are turned on in the transmitter and knowledge of any additional specific information about the transmitter's configuration that it needs in order to reverse the operations of the transmitter and decode the data.

The description above is sufficient to enable one of ordinary skill in the art to implement the present invention. Nonetheless, to provide additional details regarding the present system, an assembler code listing for a method of implementing certain aspects of the presently described device is provided below. The code has been written for use with a Texas Instruments' TMS320C51 digital signal processor. A User's Guide for the TMS320C5x series of processors is readily available to those of ordinary skill in the art and may be useful to the novice in understanding the commands set forth below.

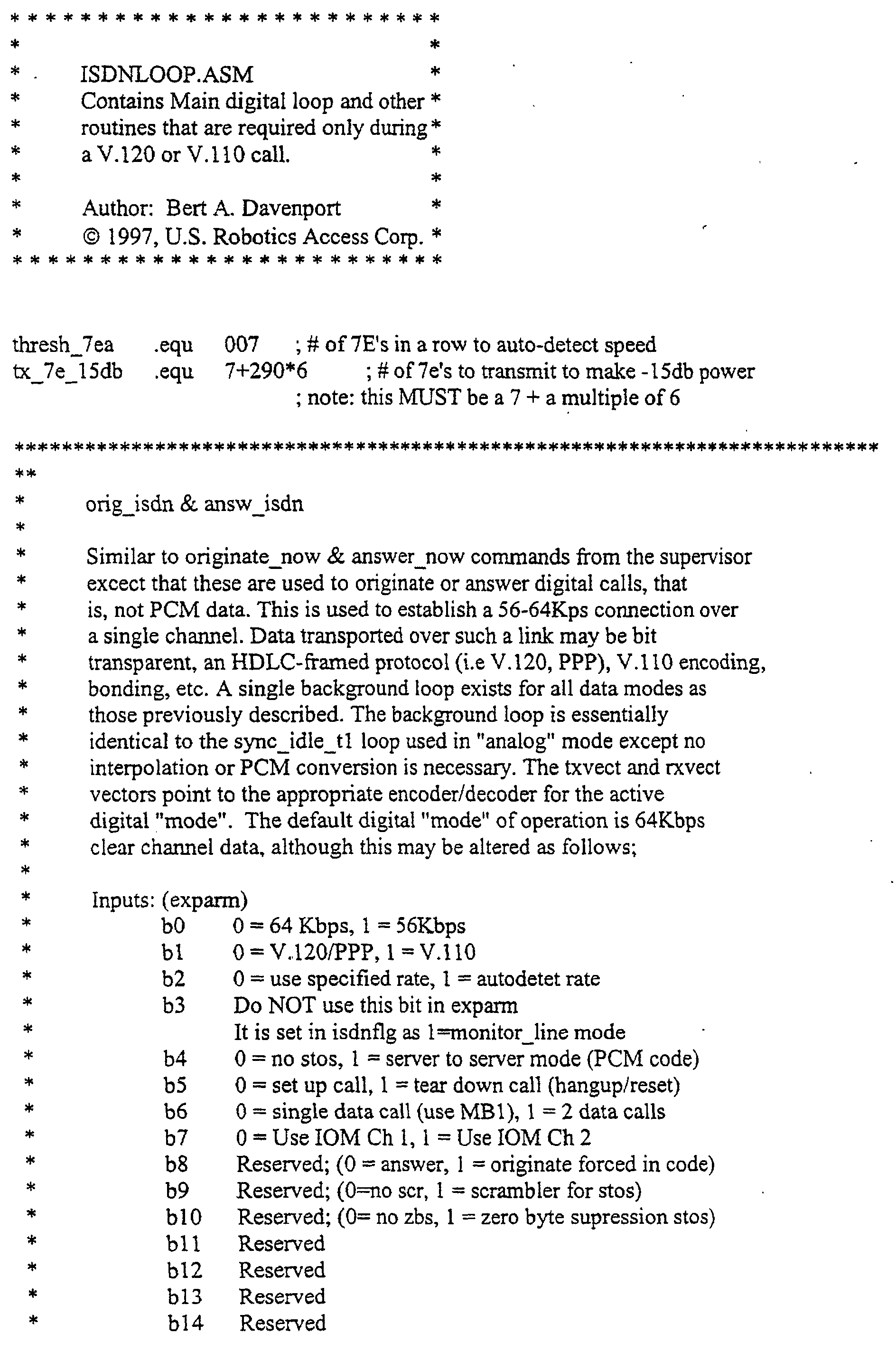

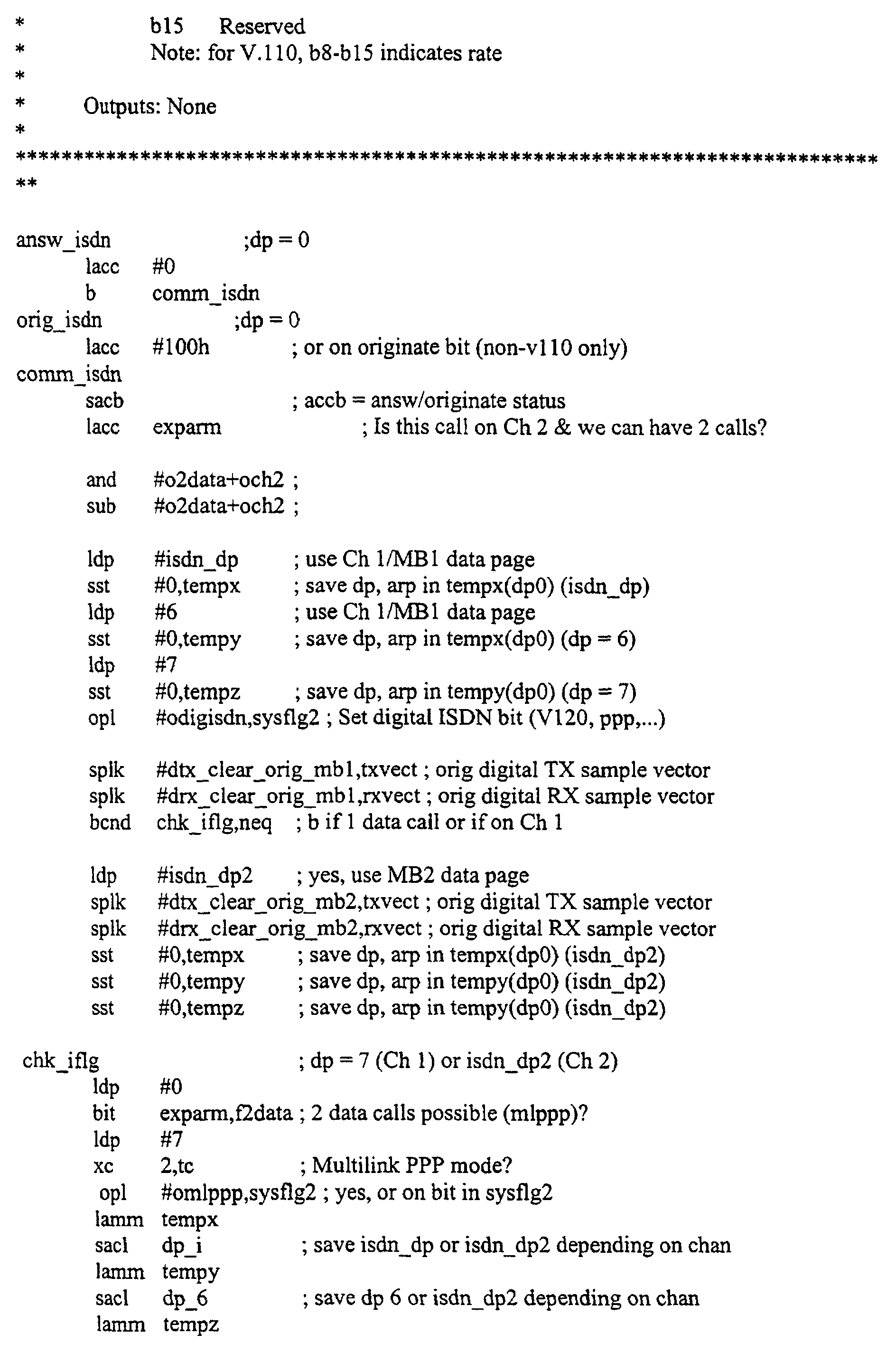

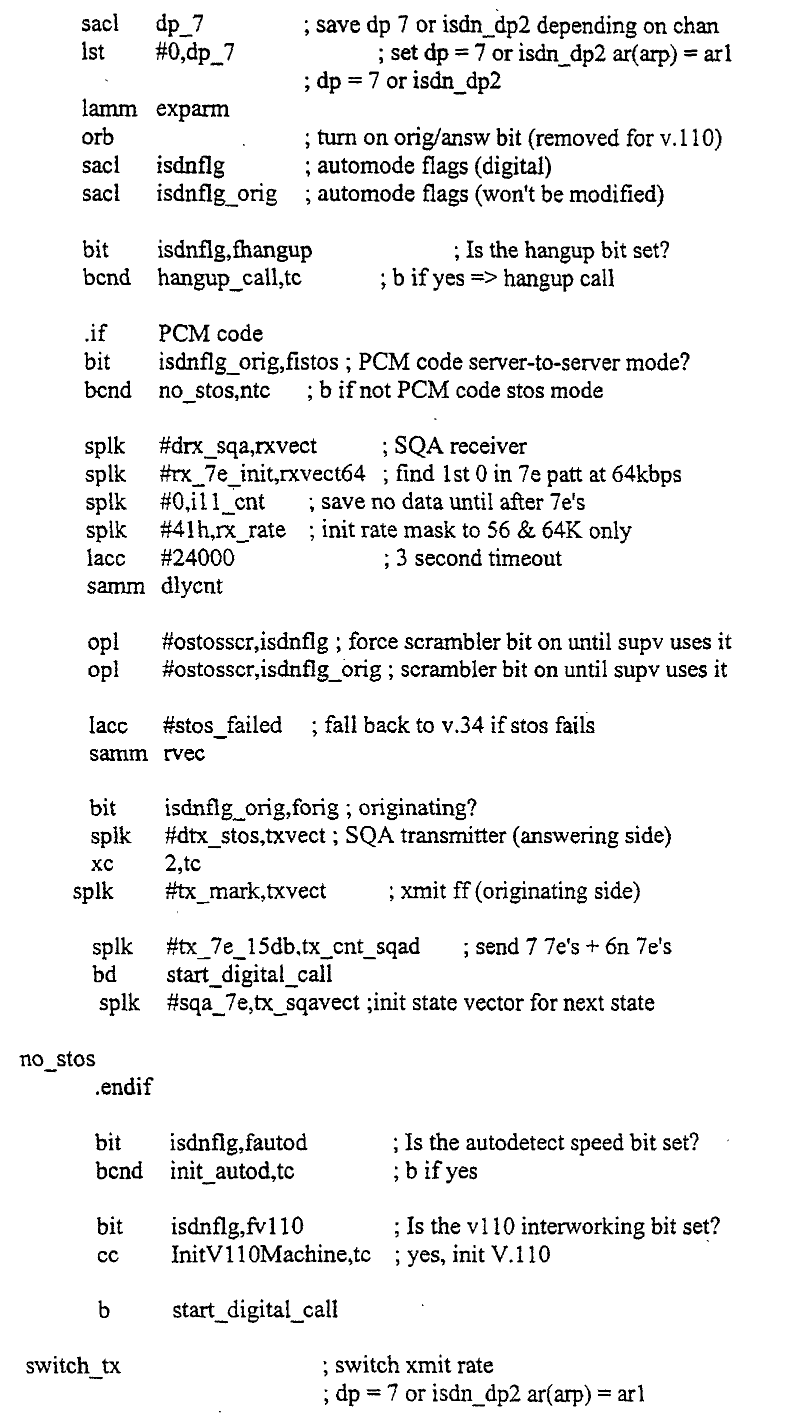

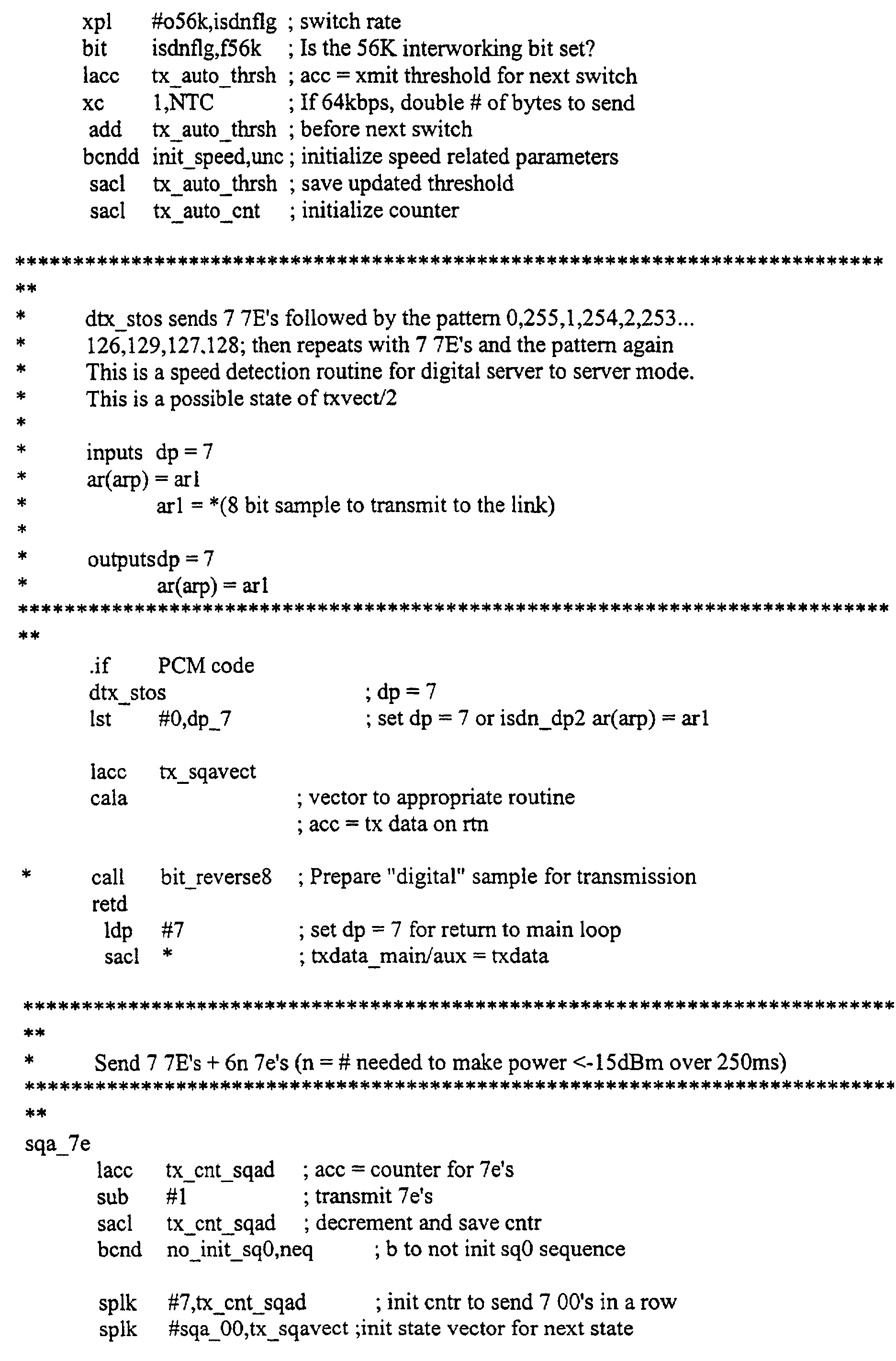

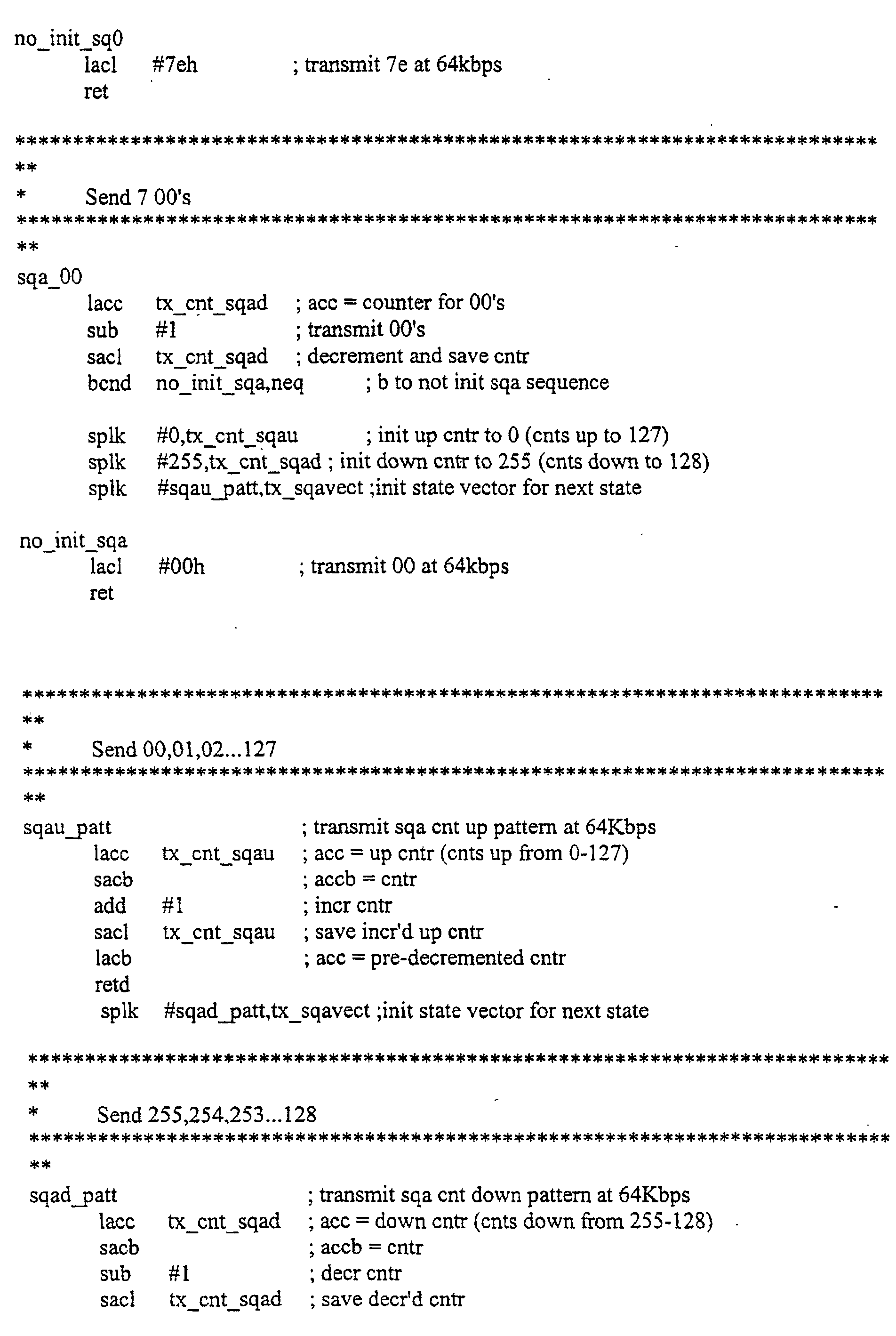

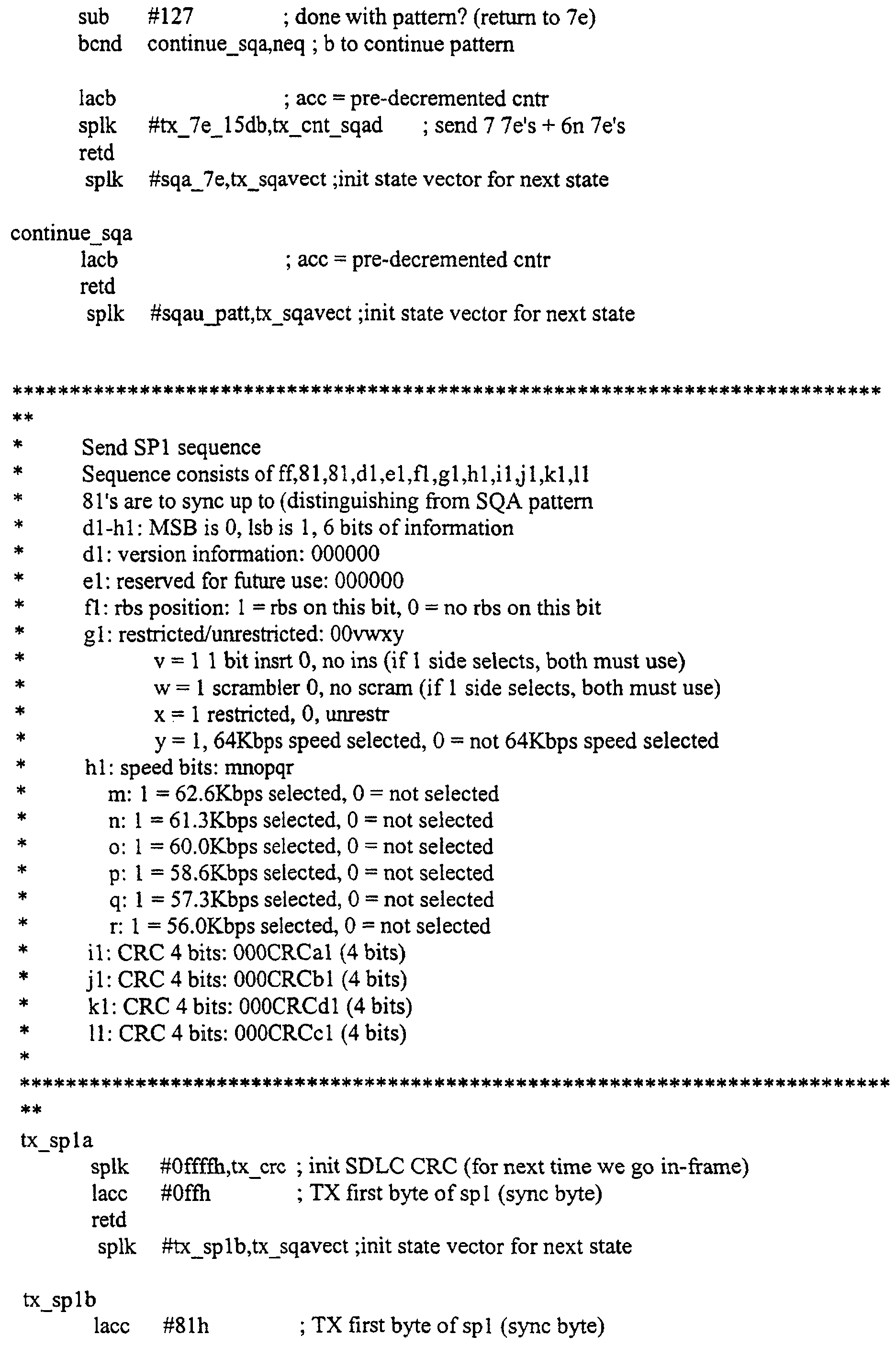

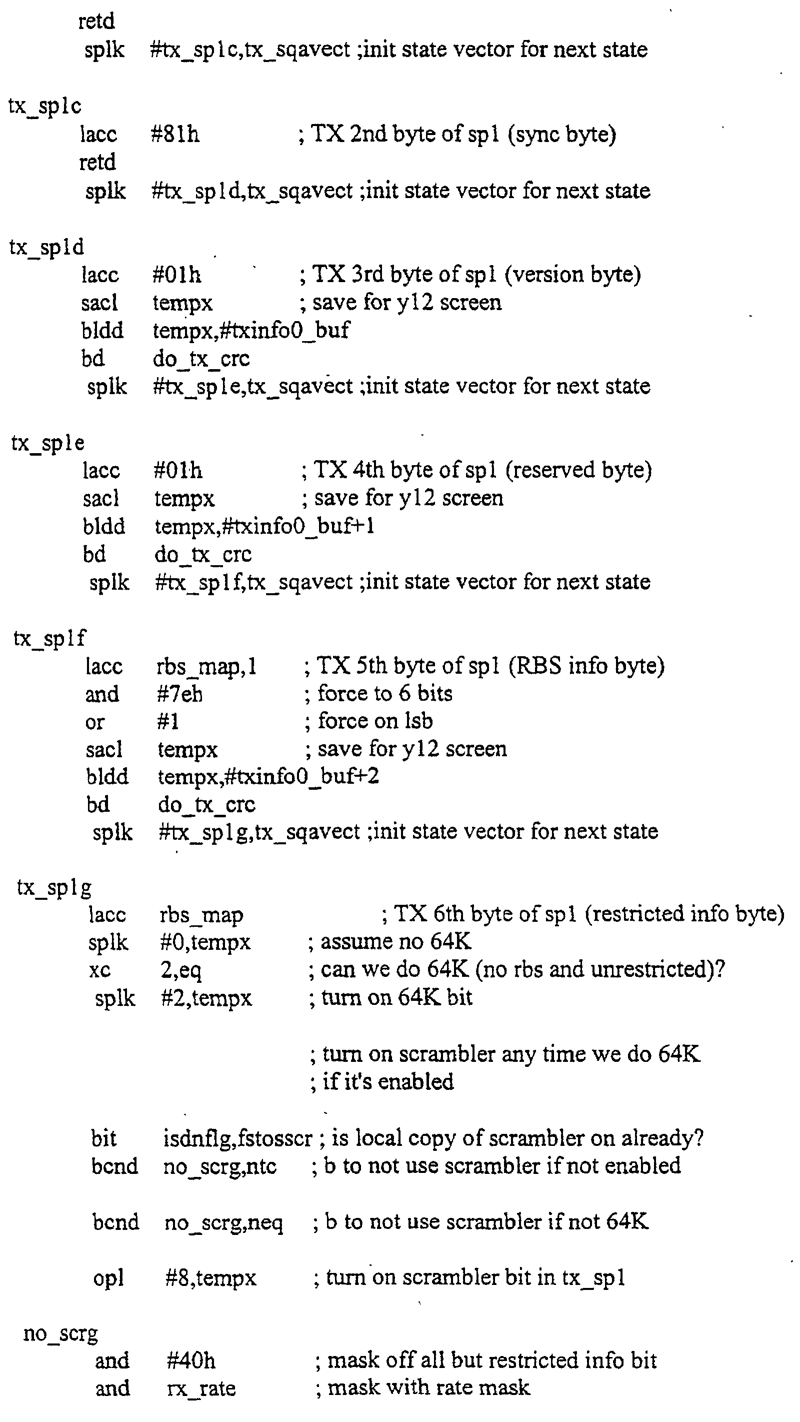

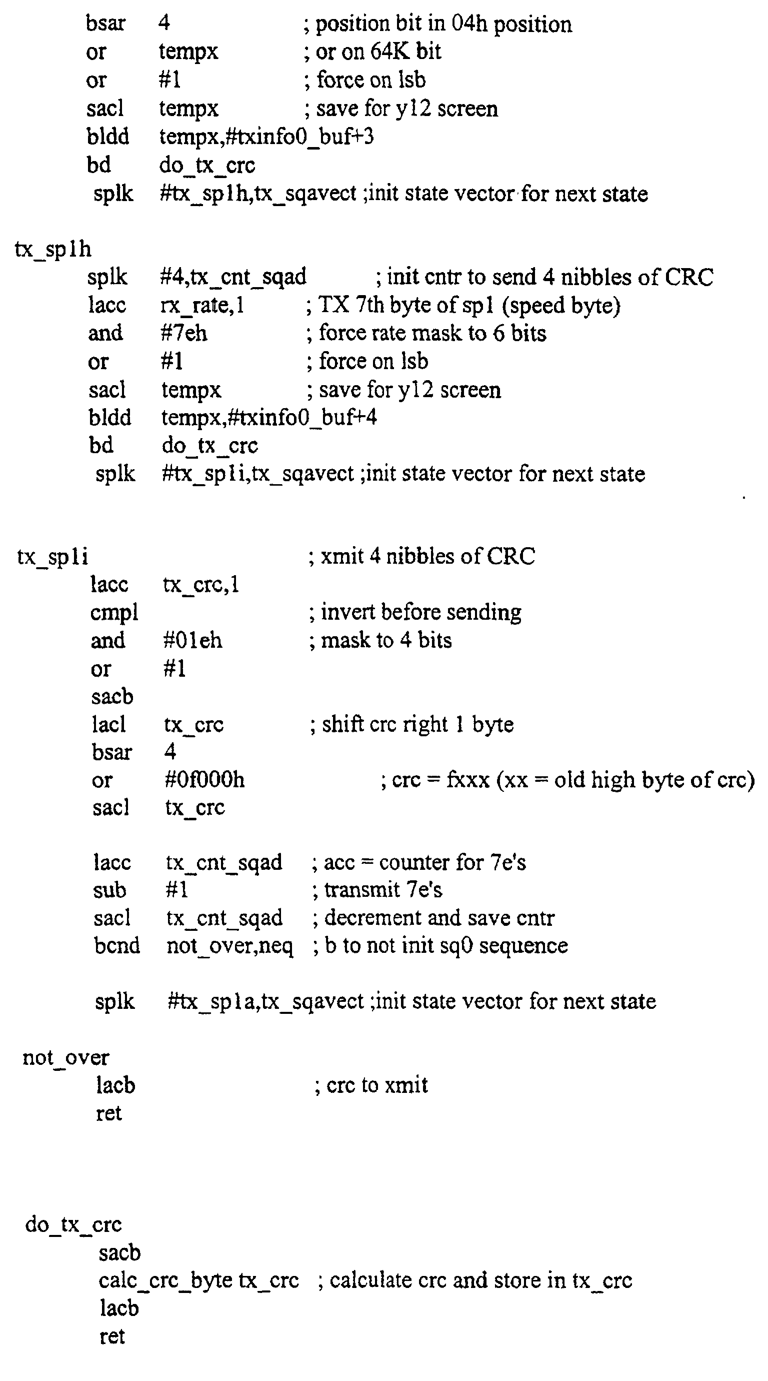

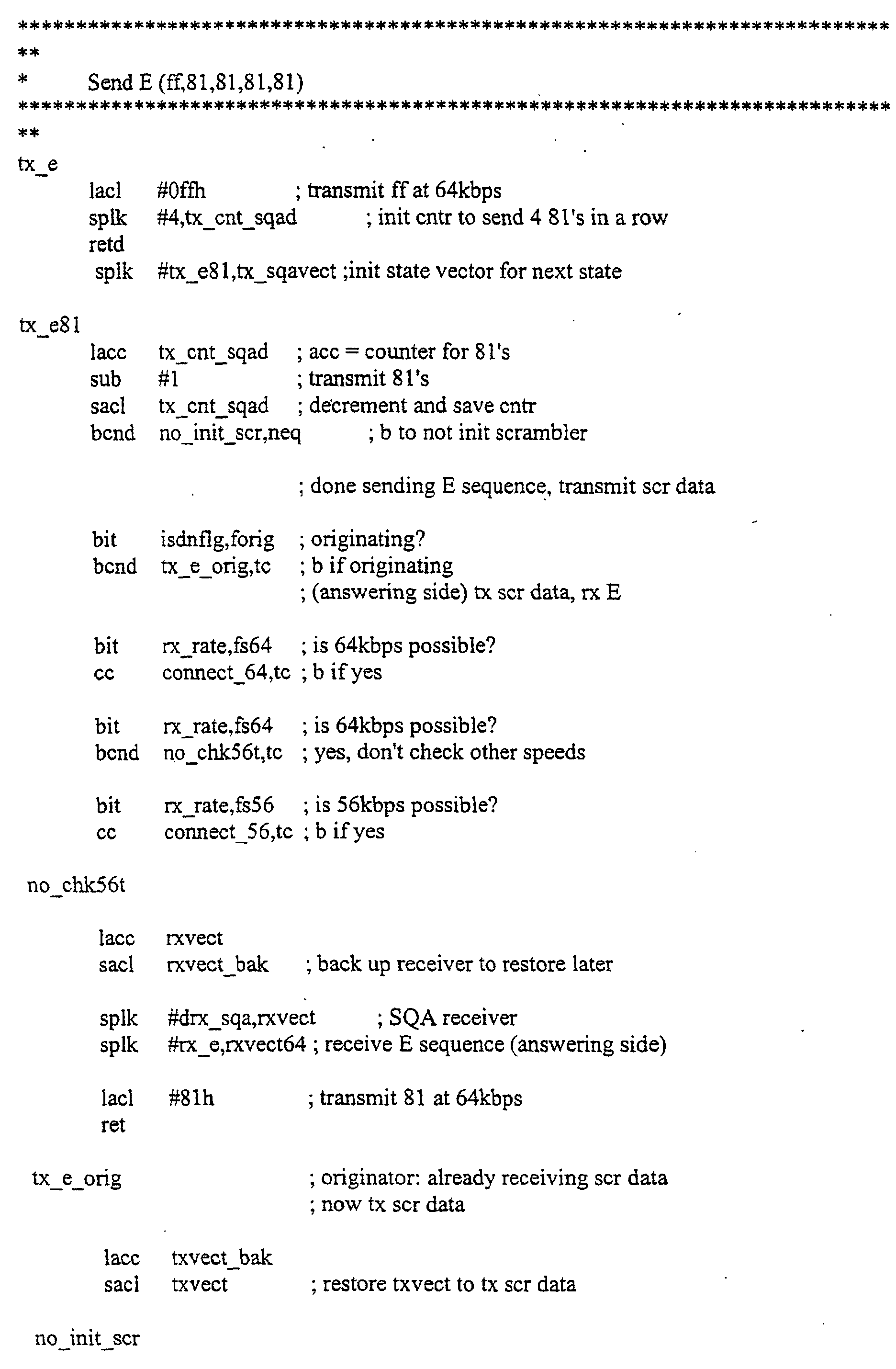

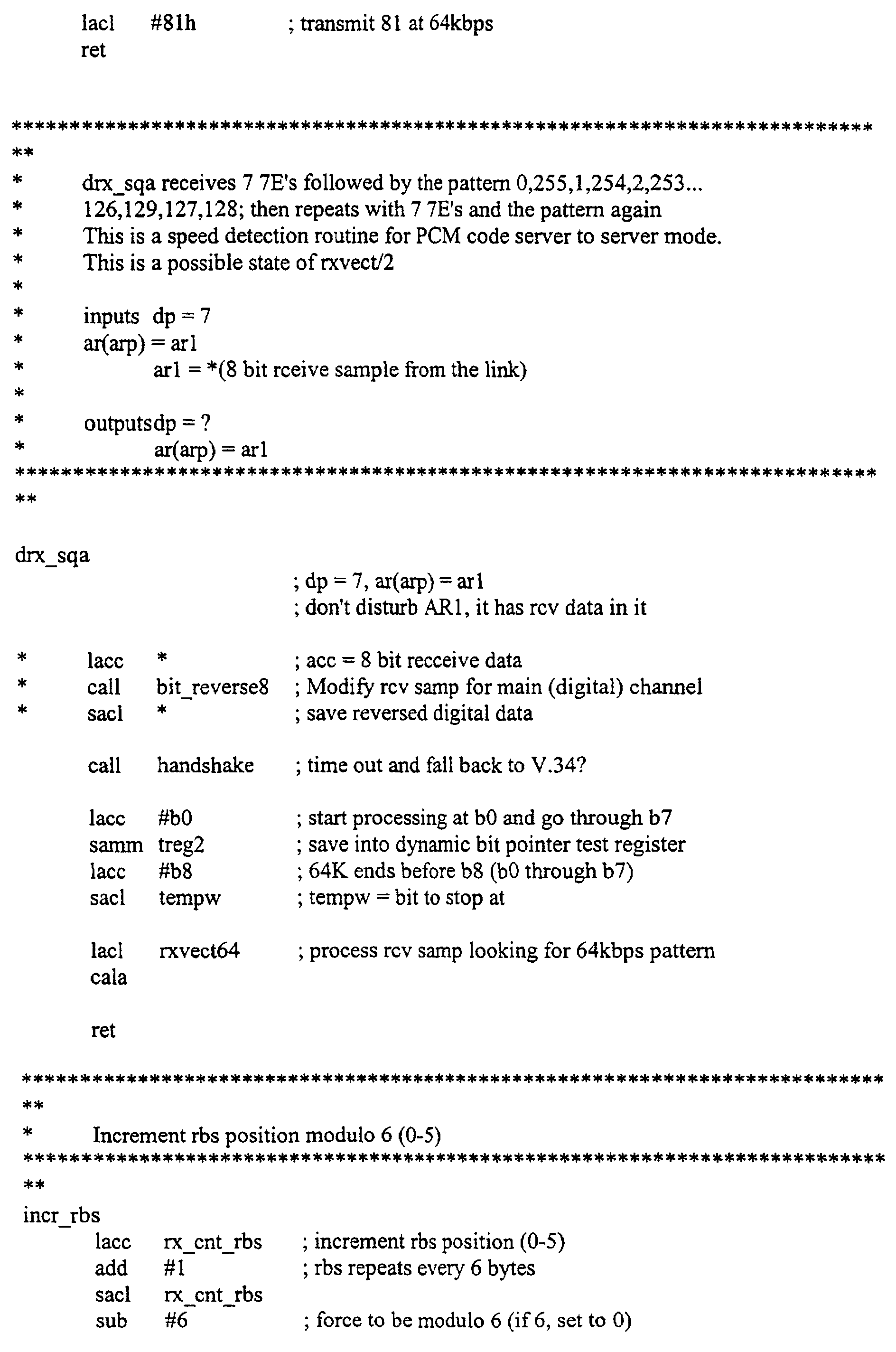

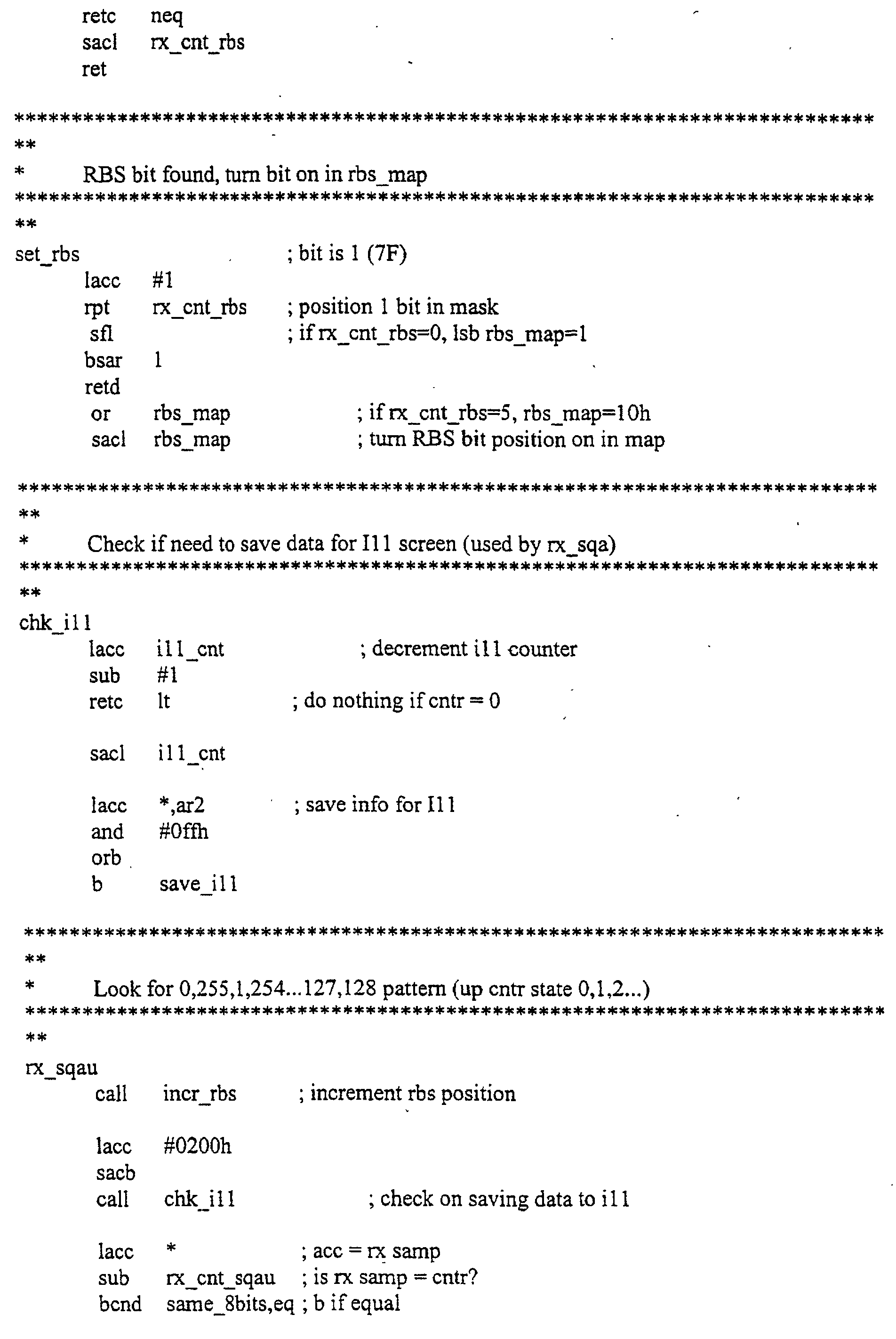

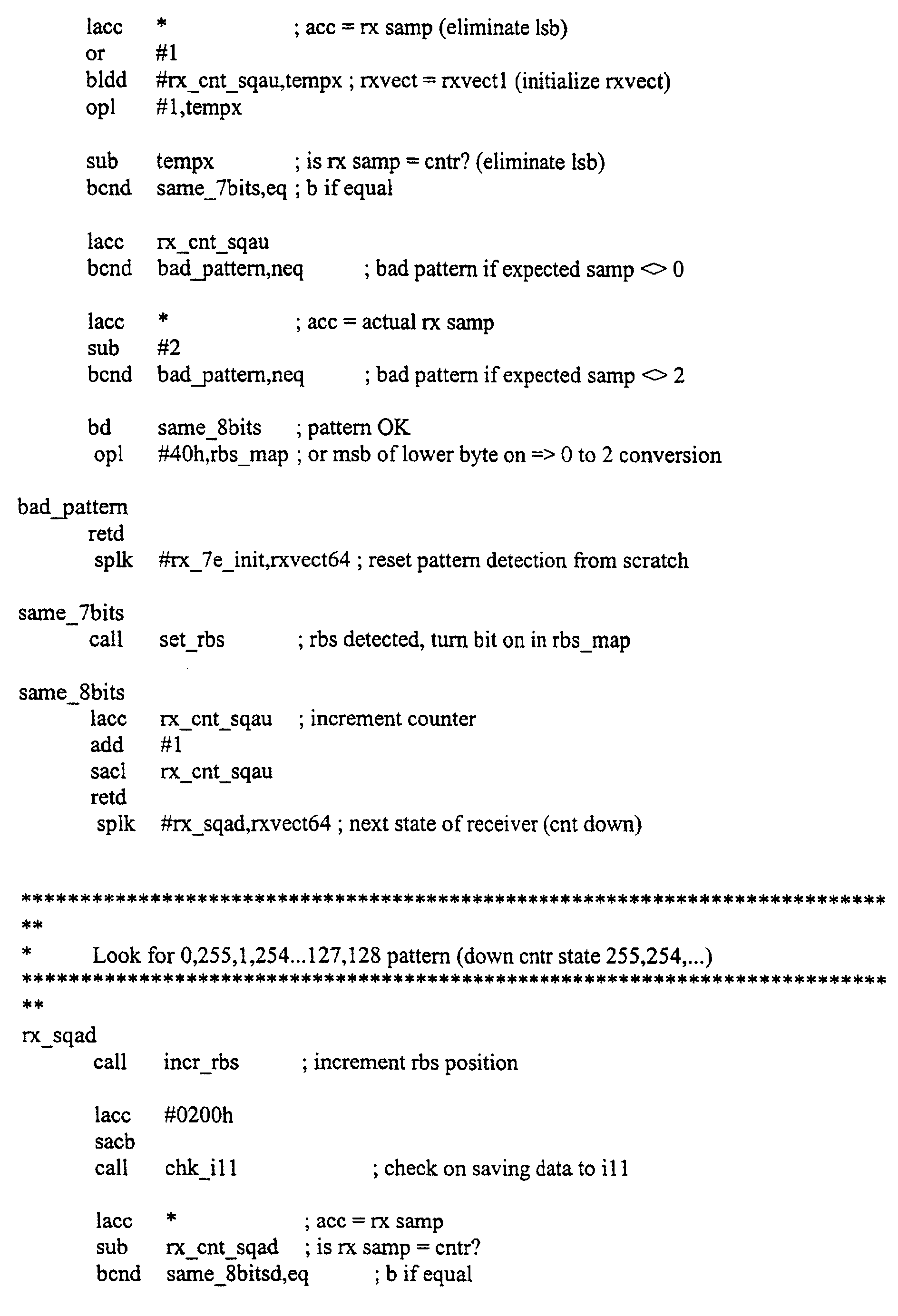

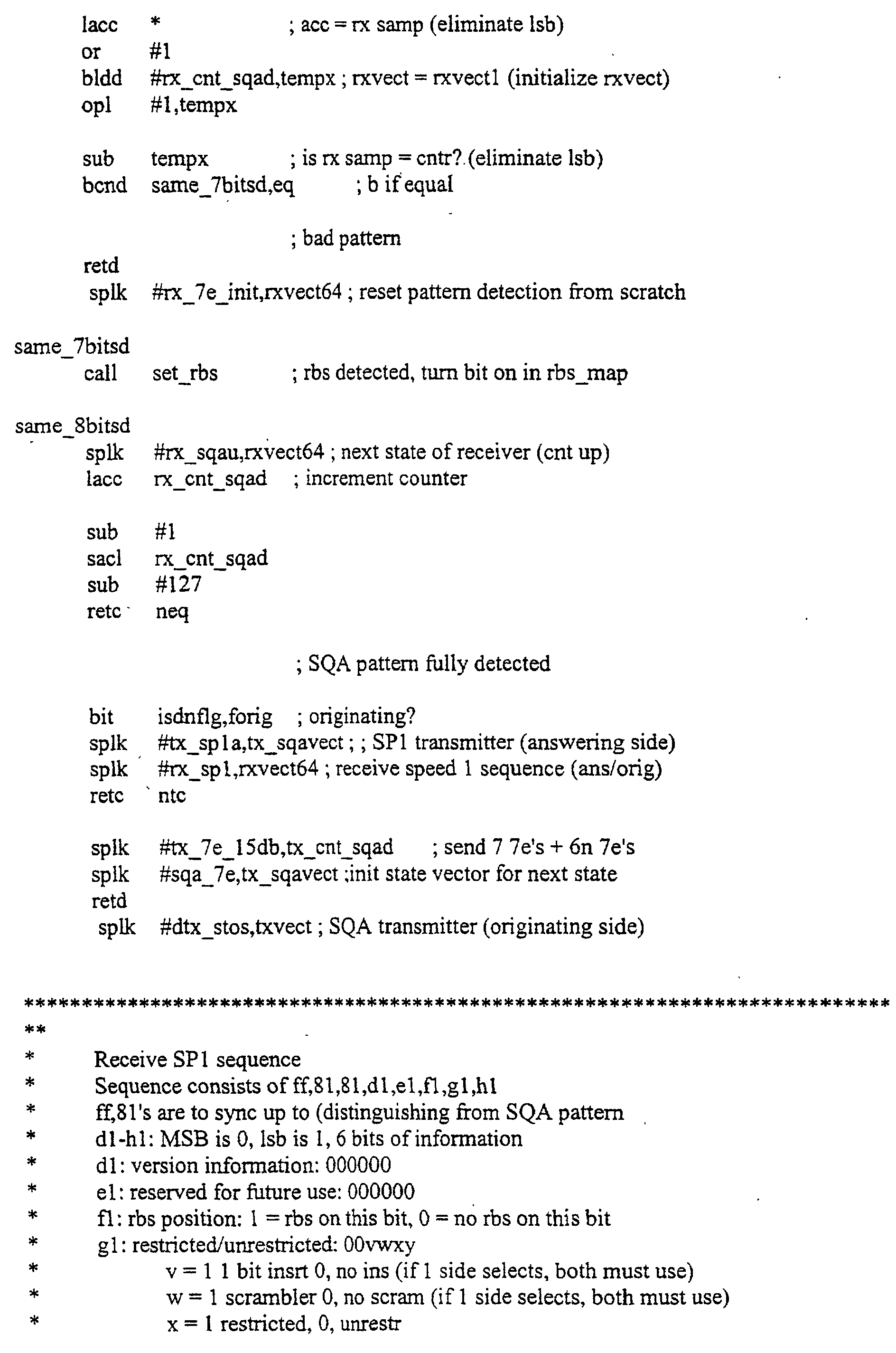

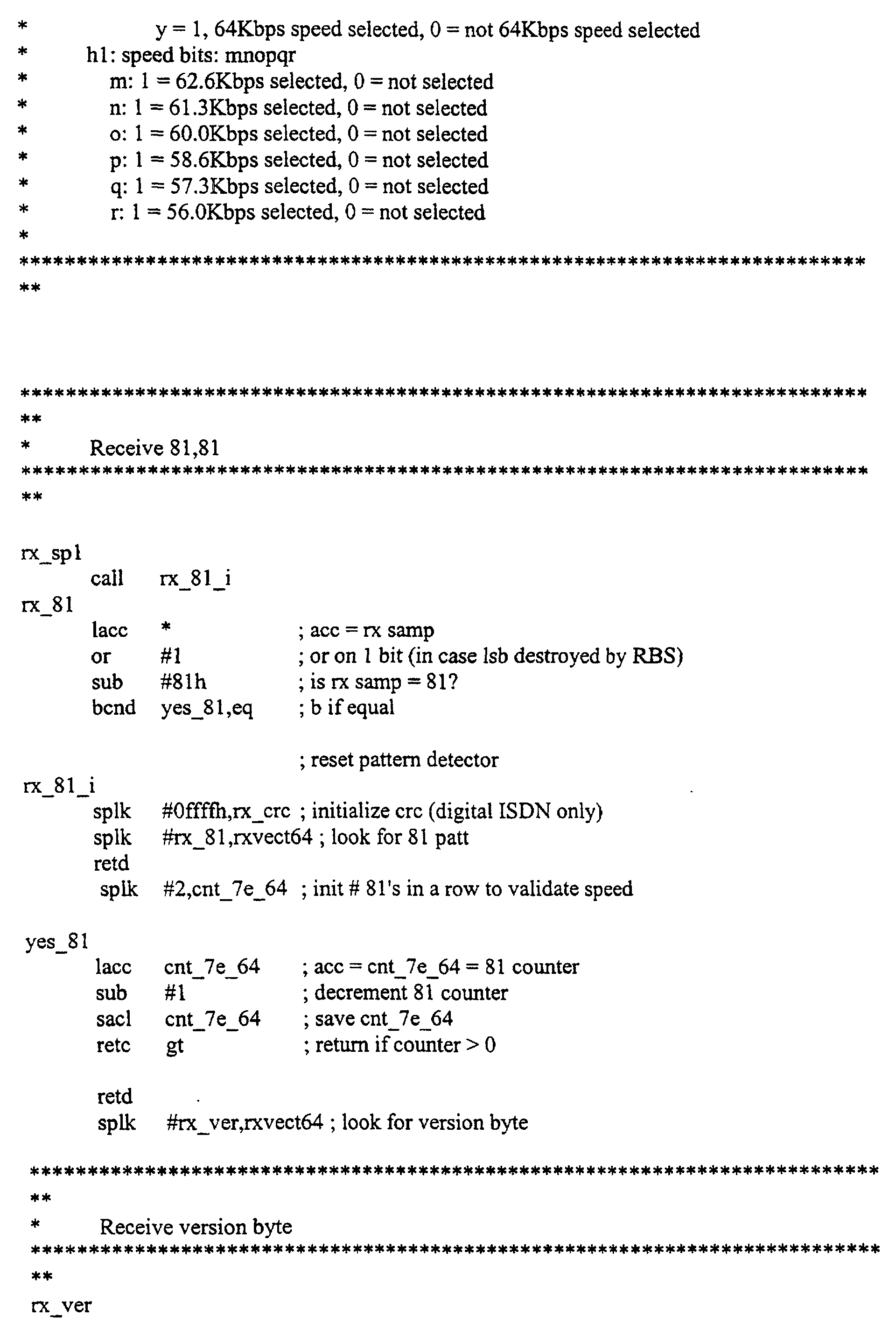

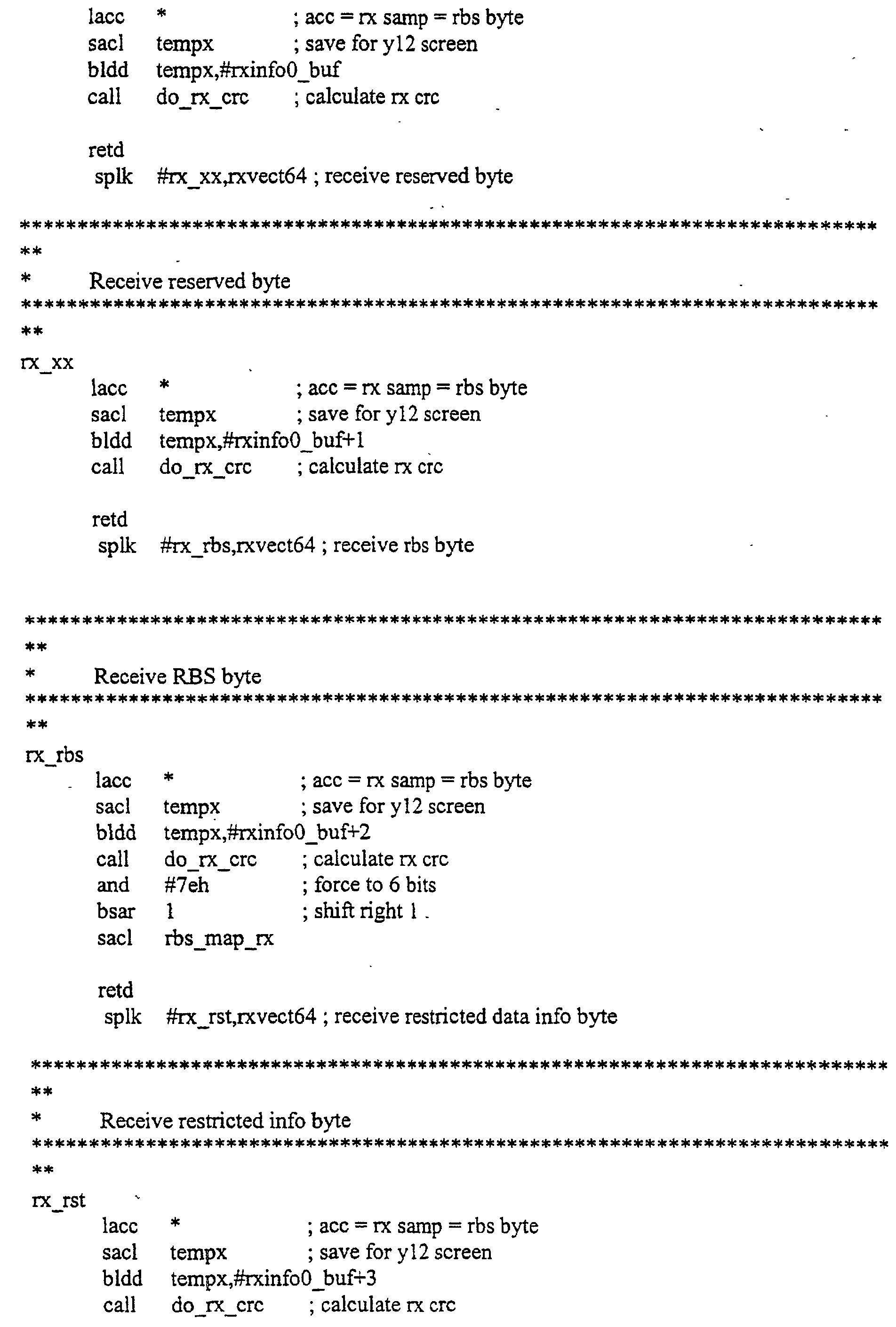

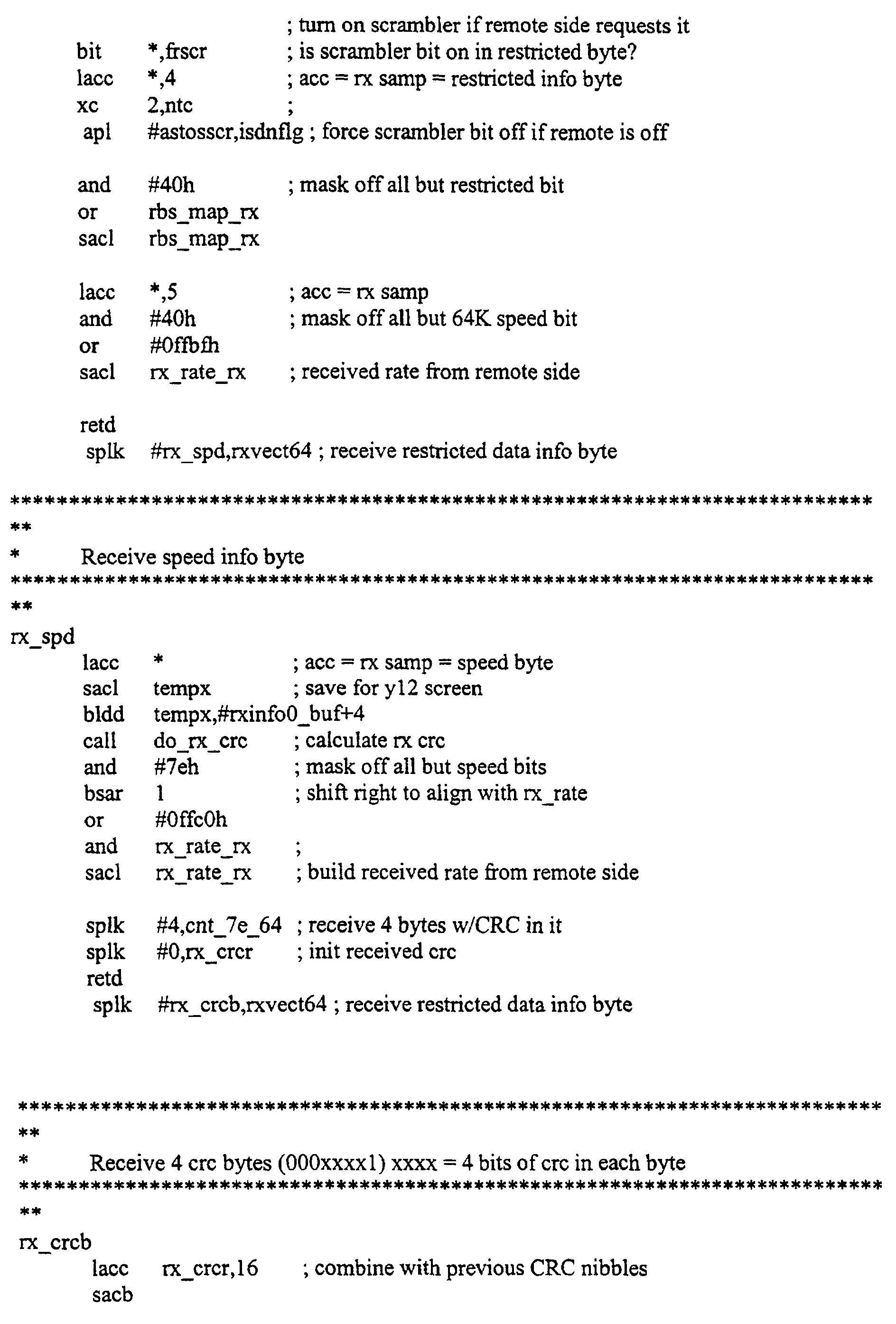

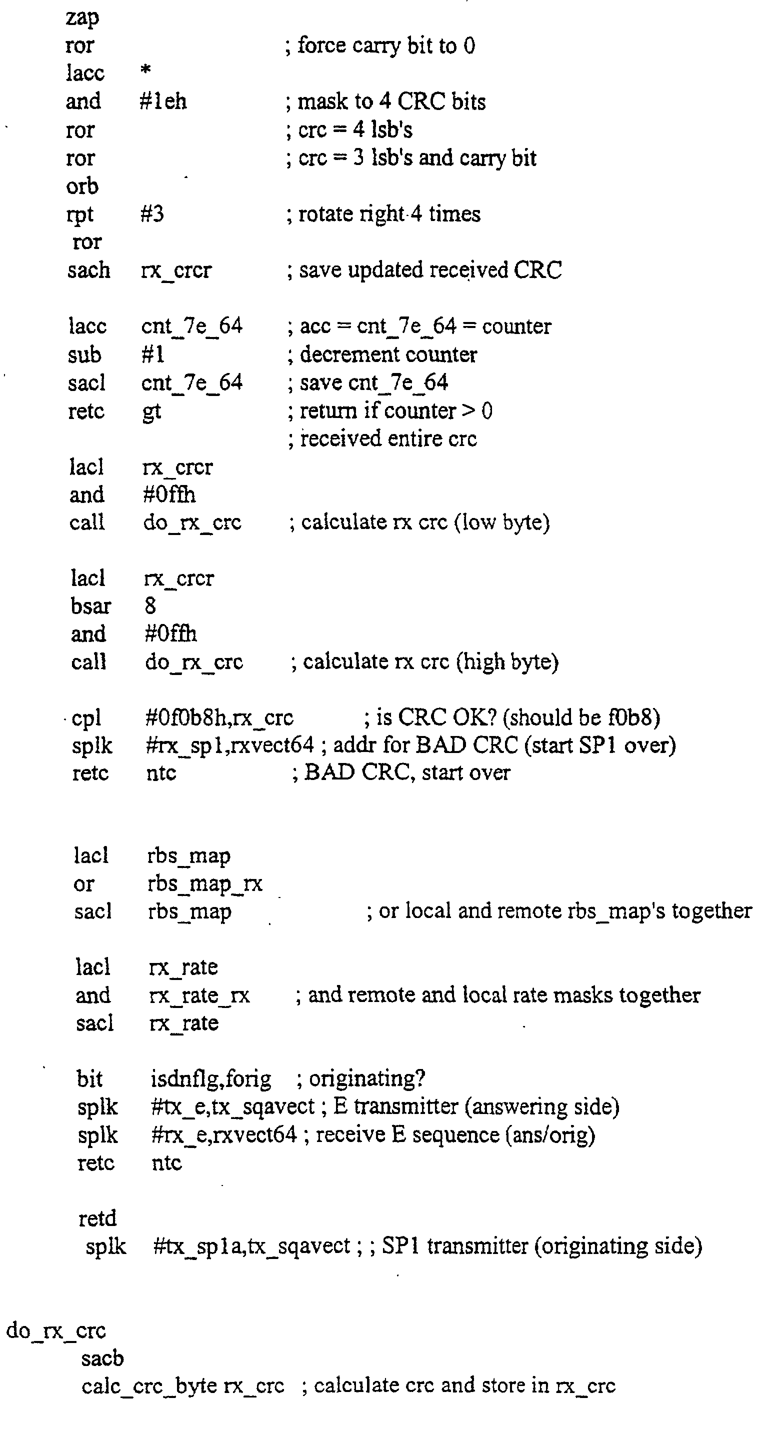

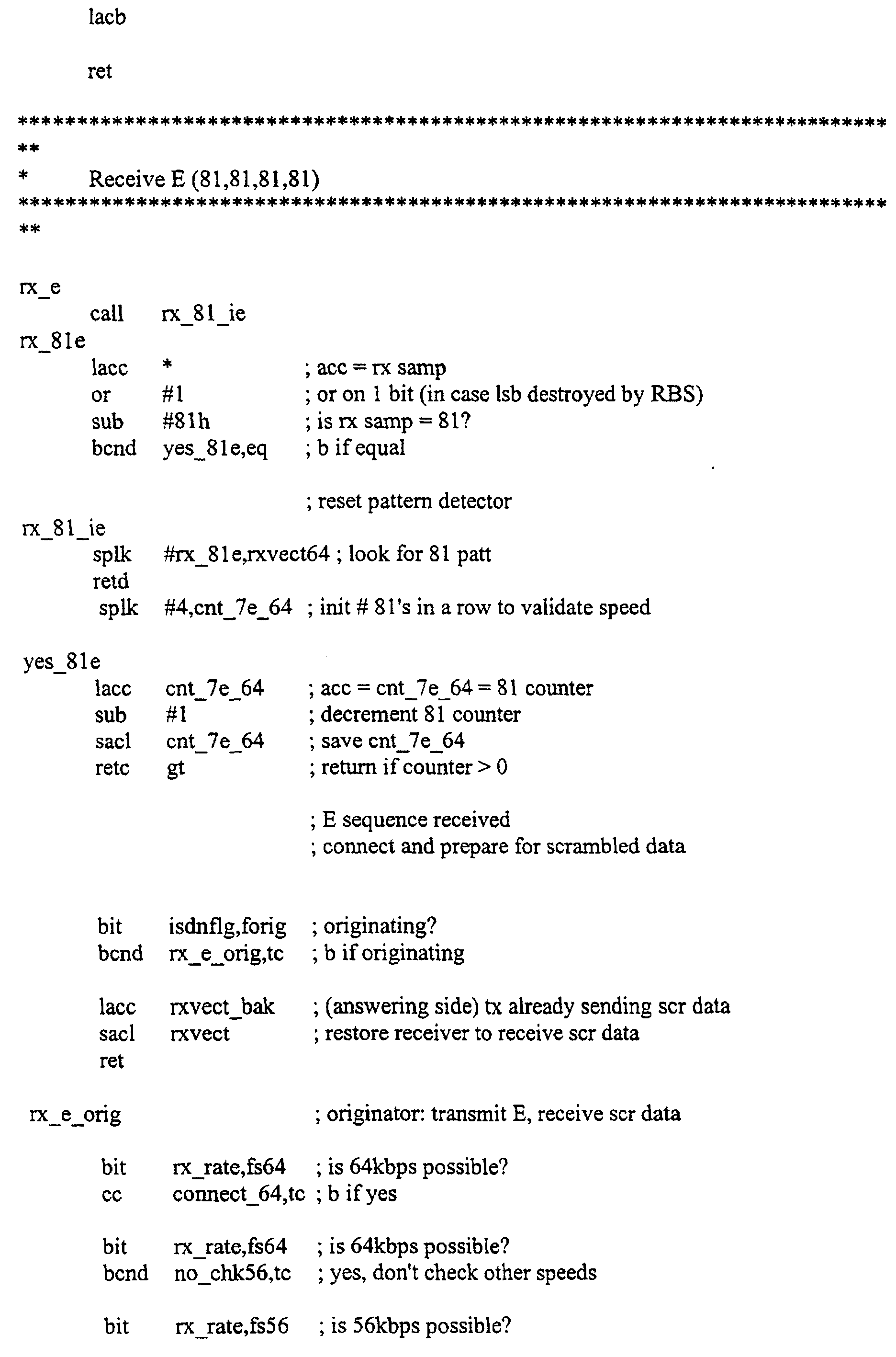

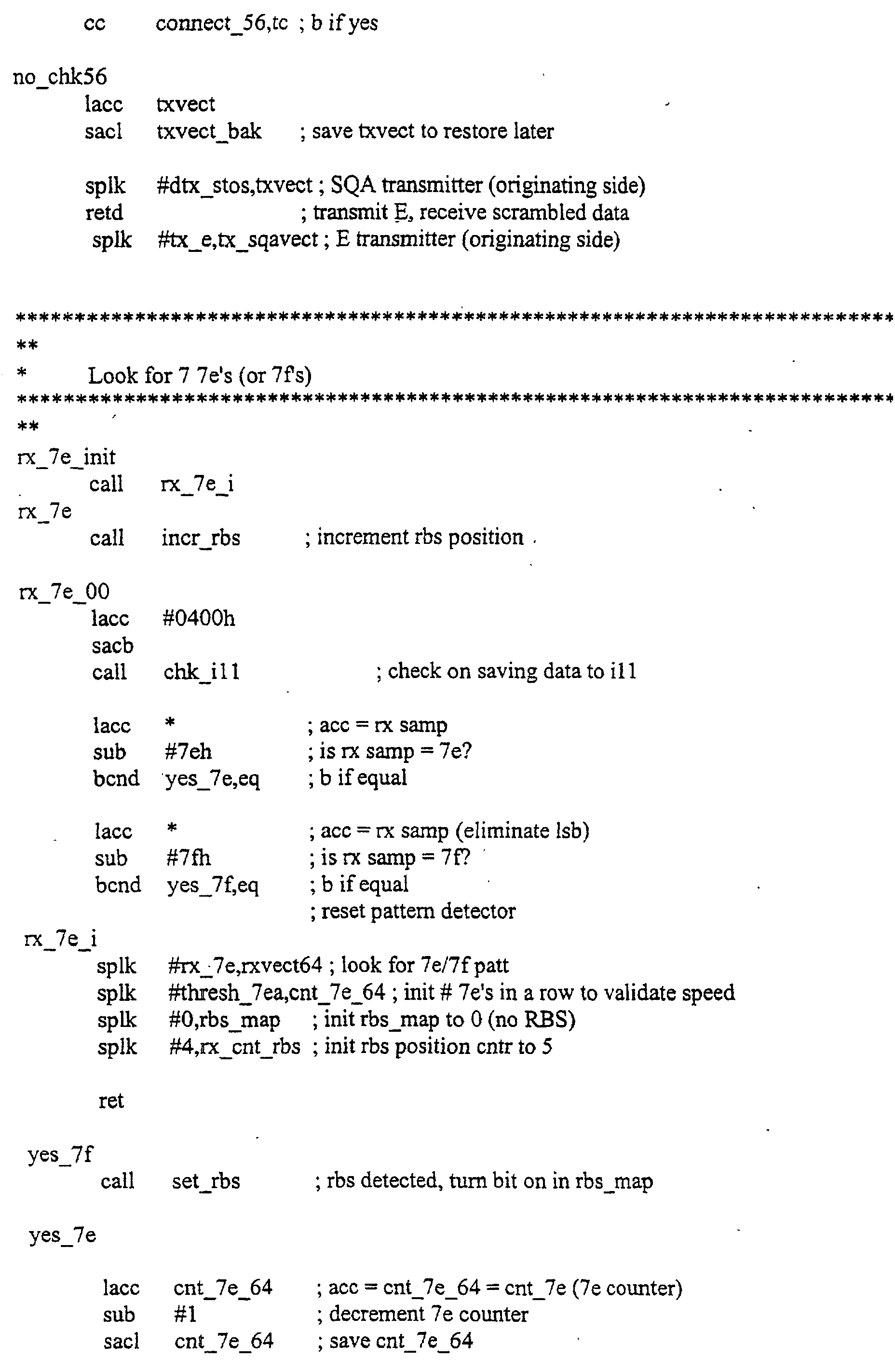

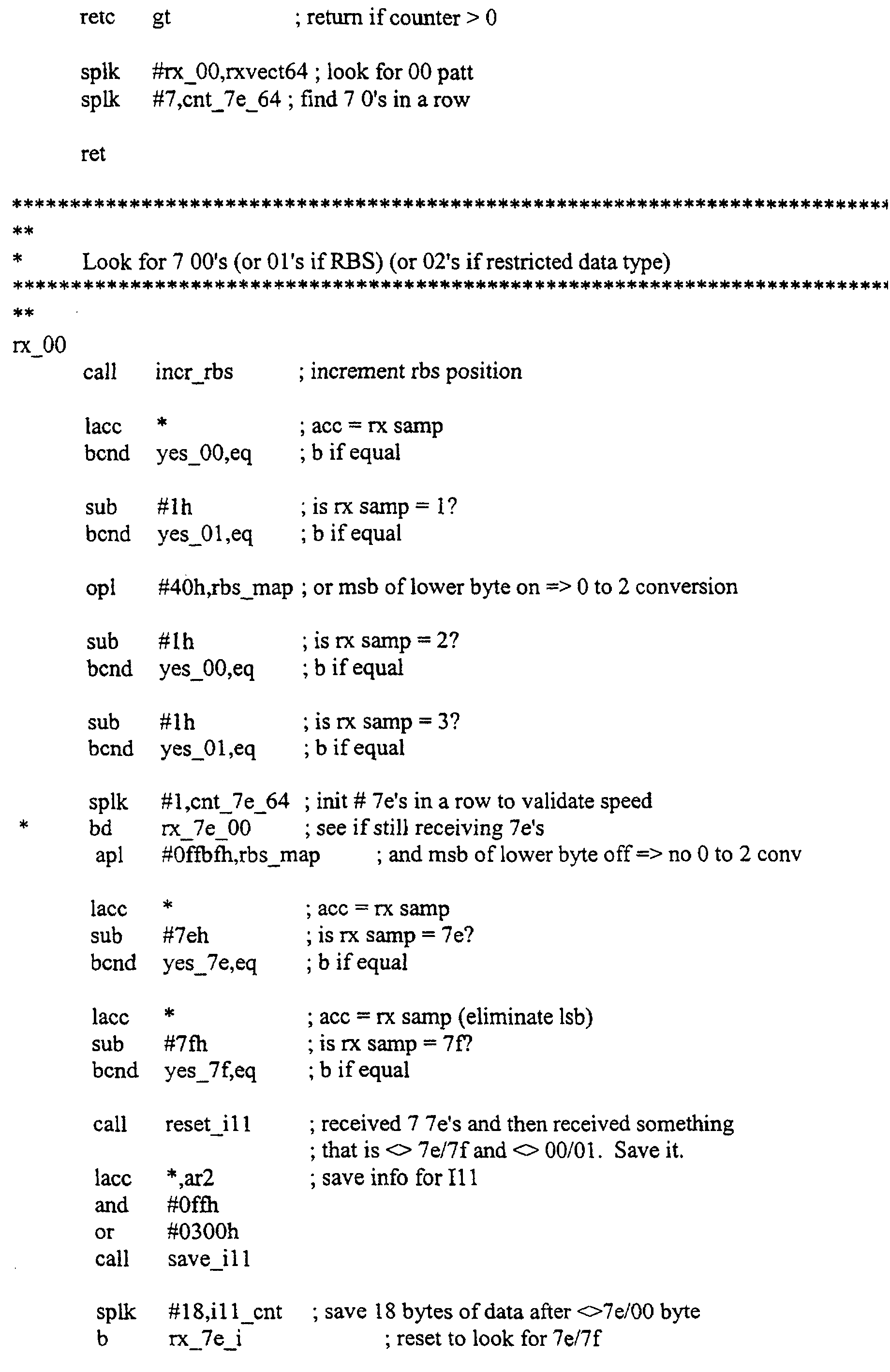

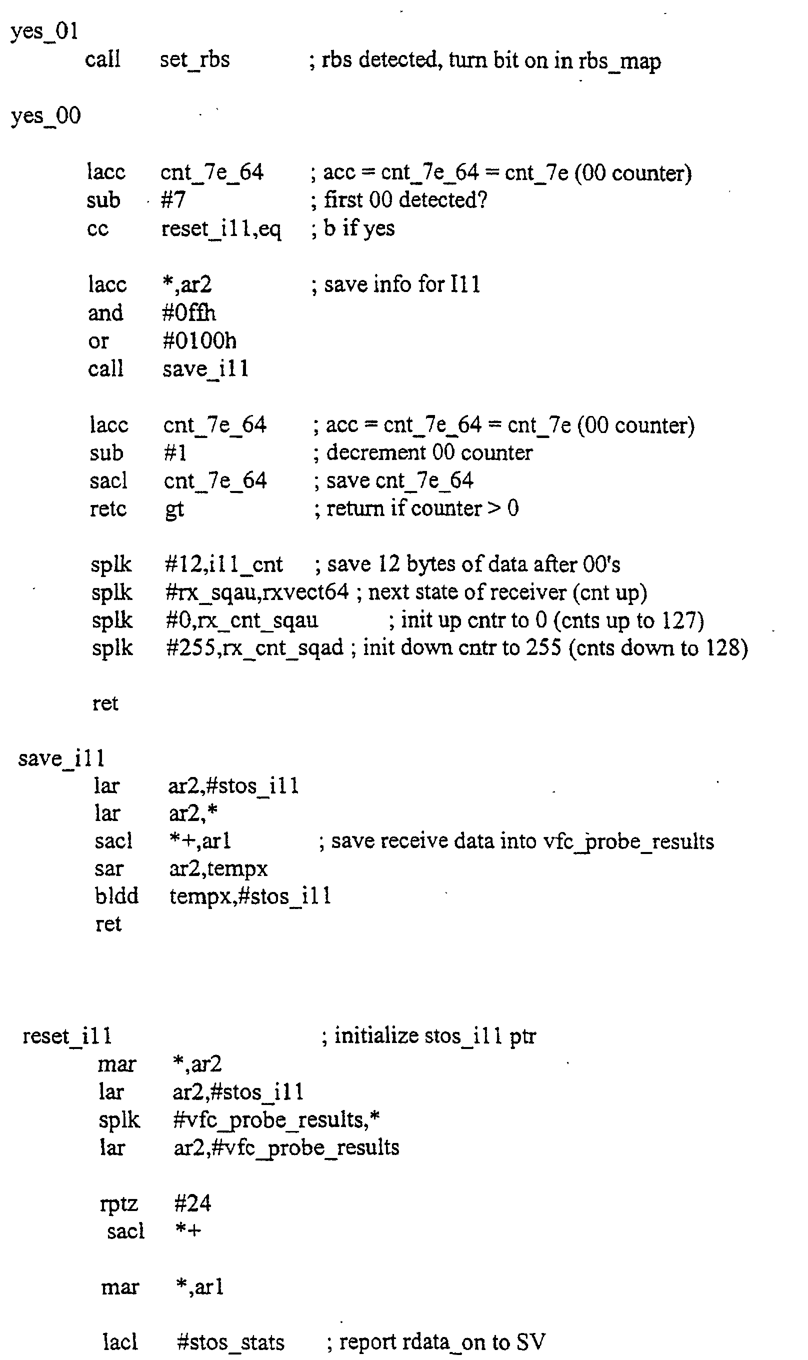

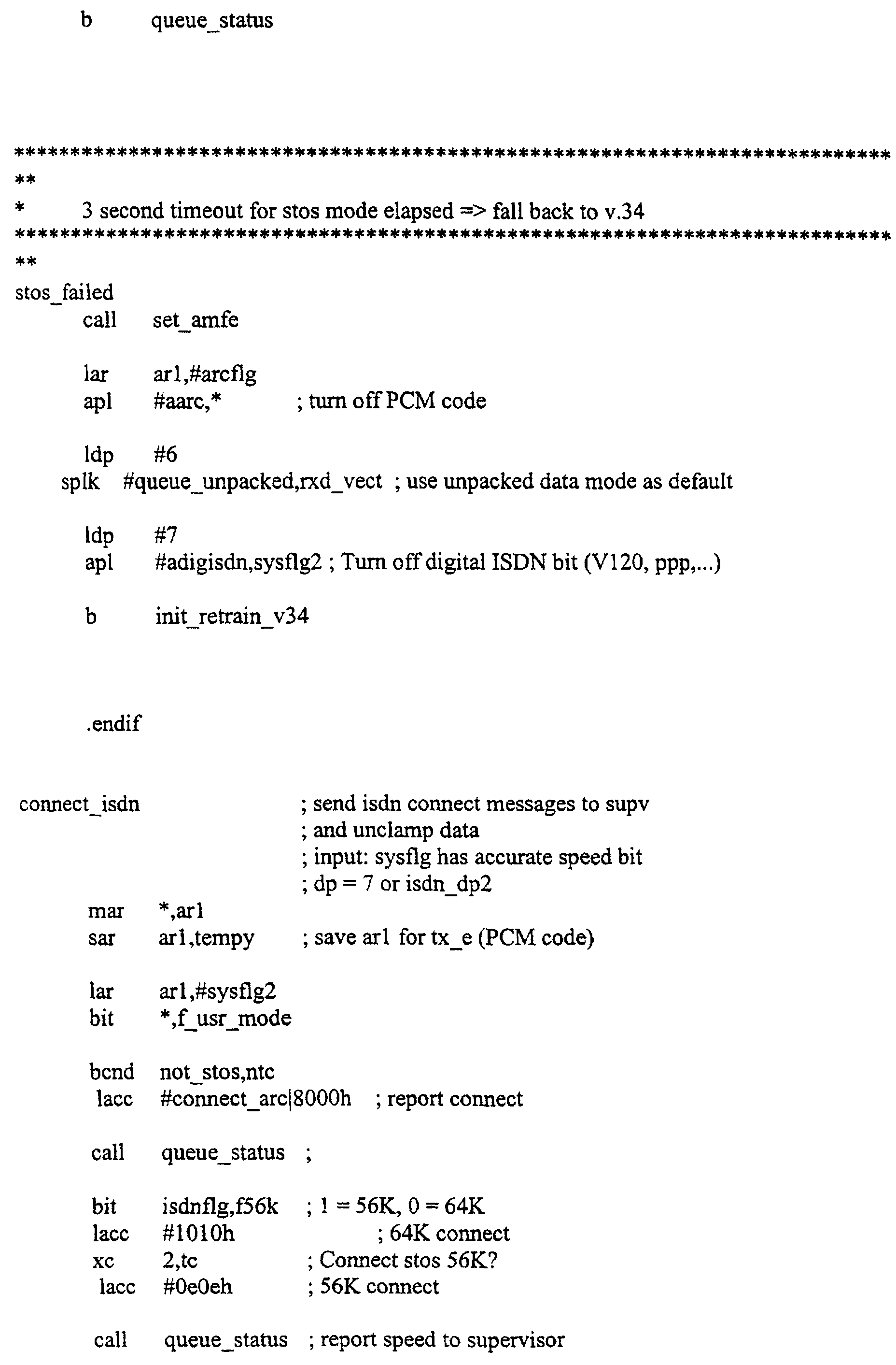

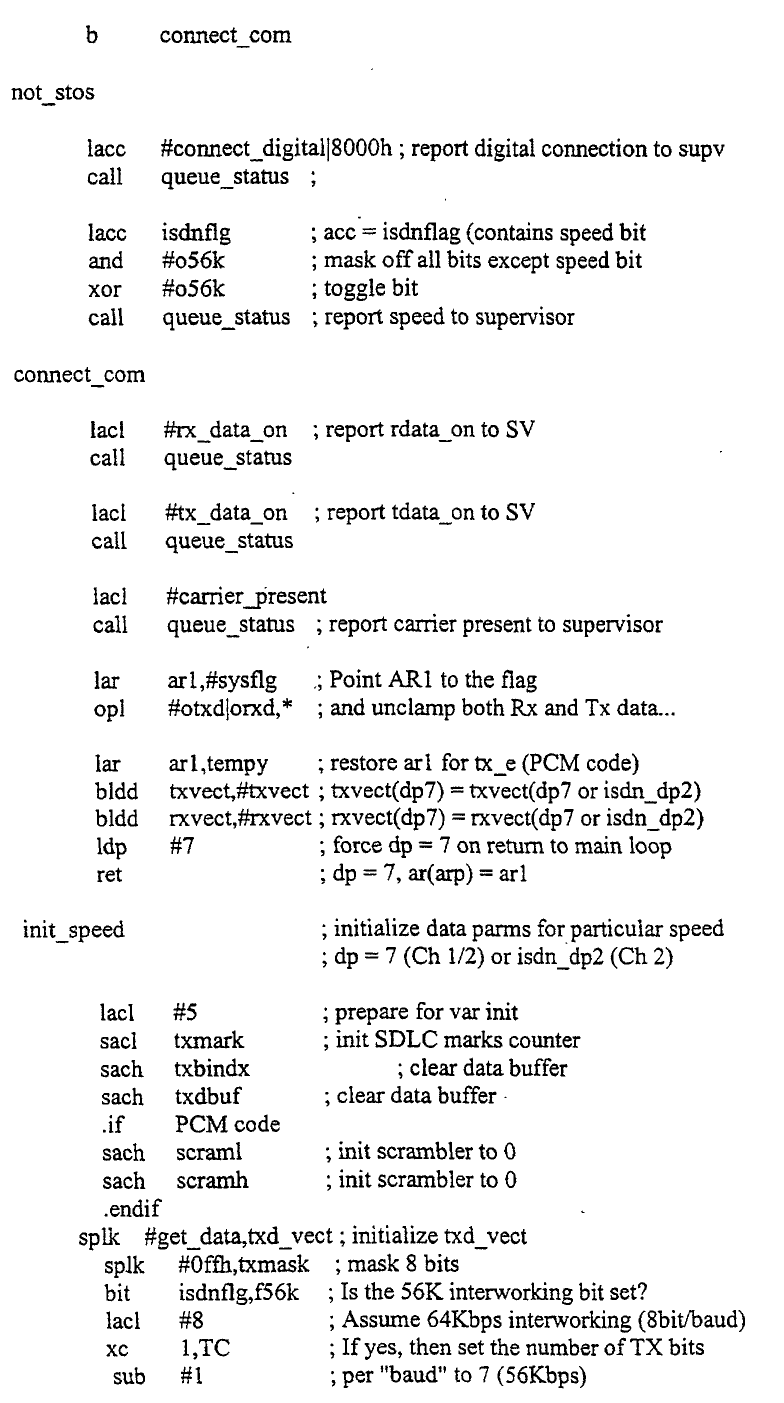

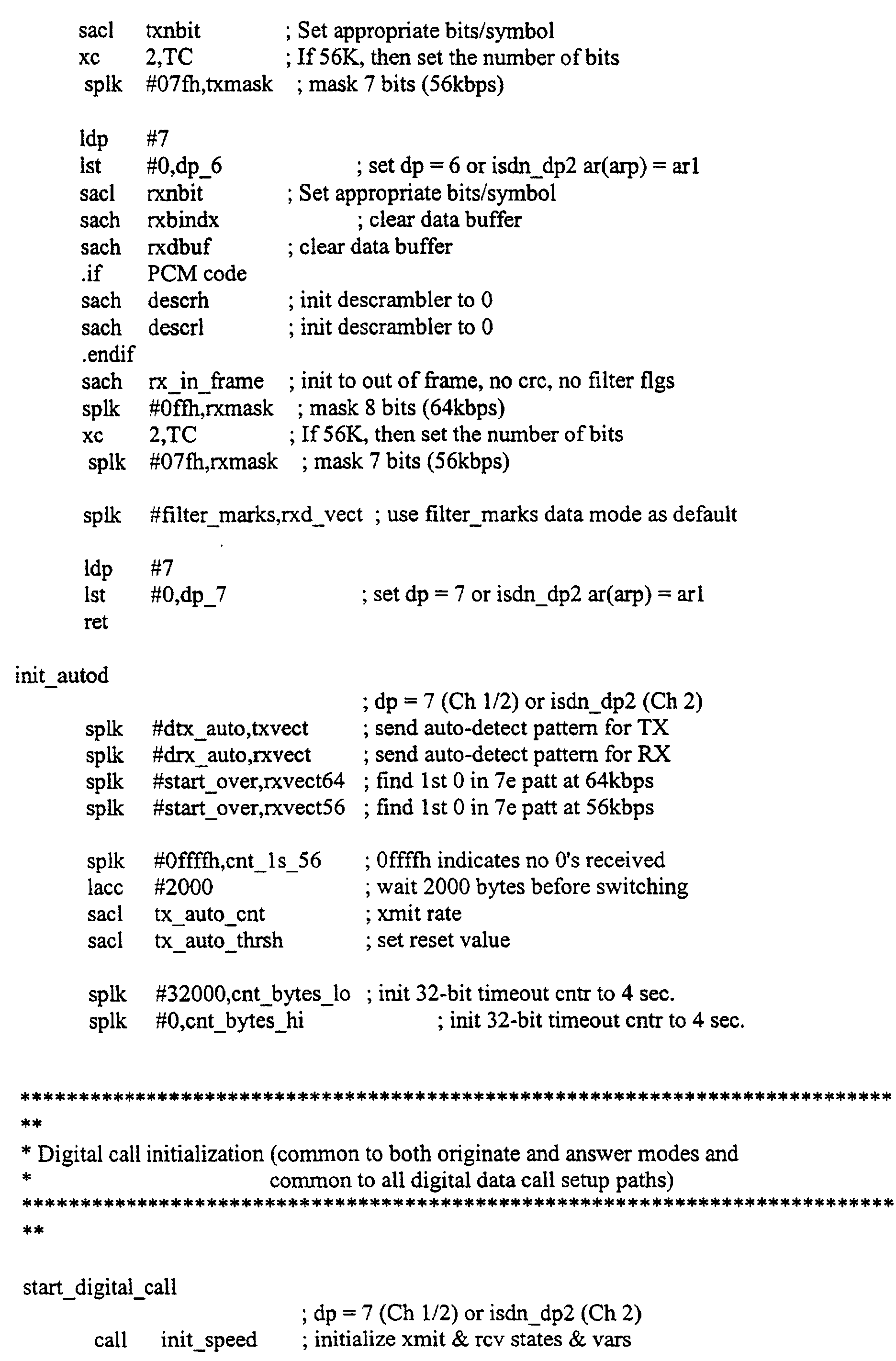

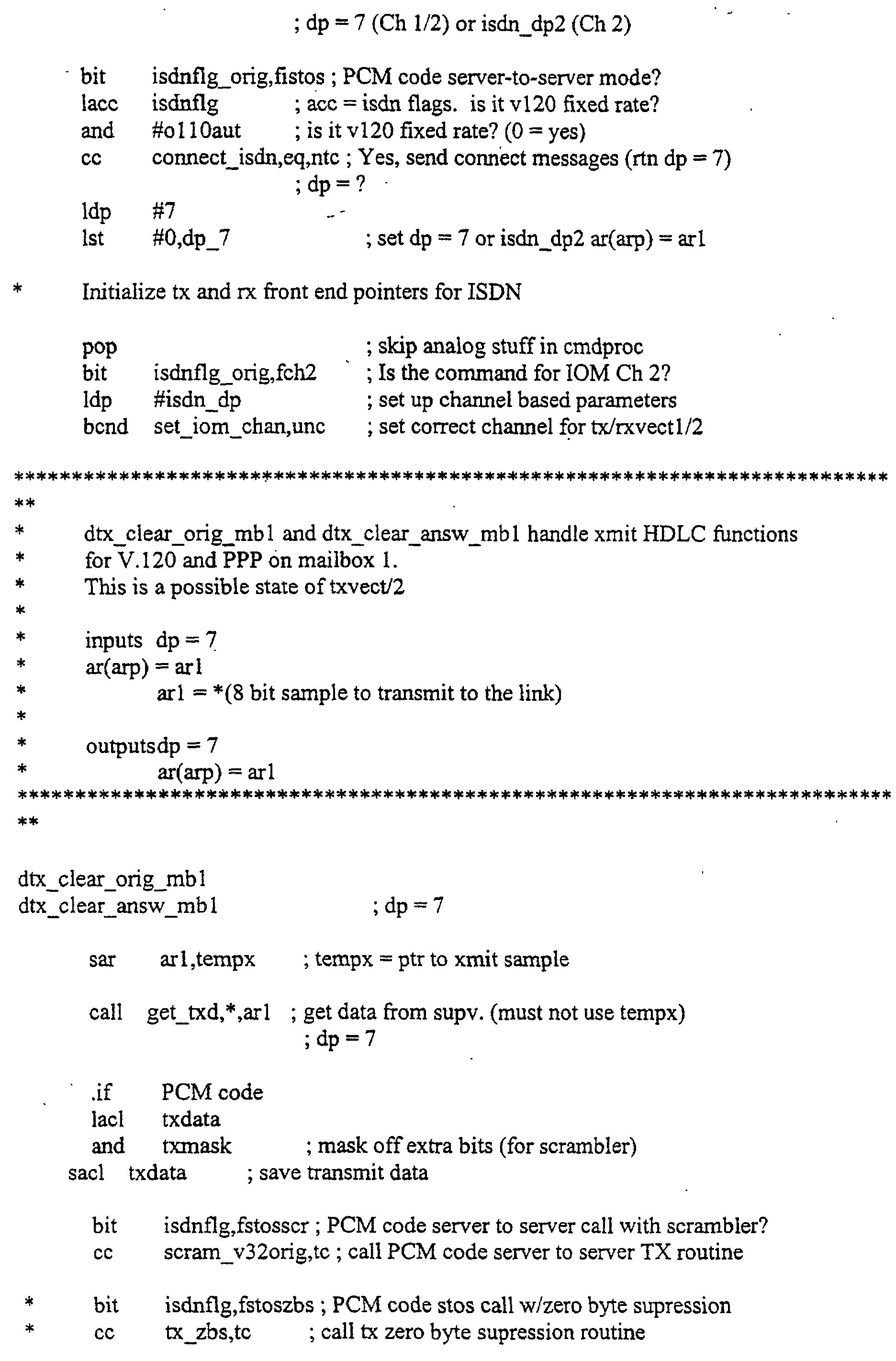

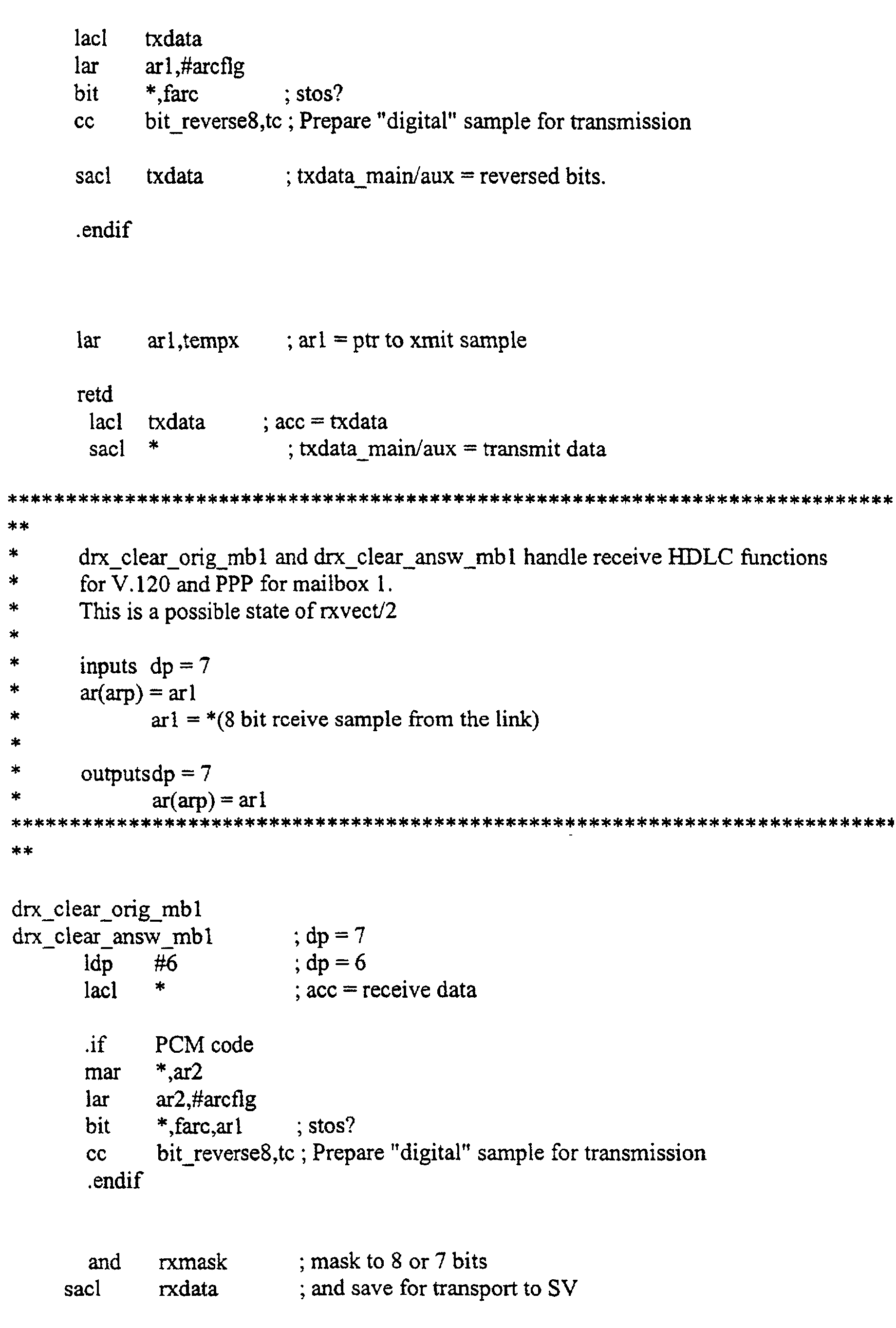

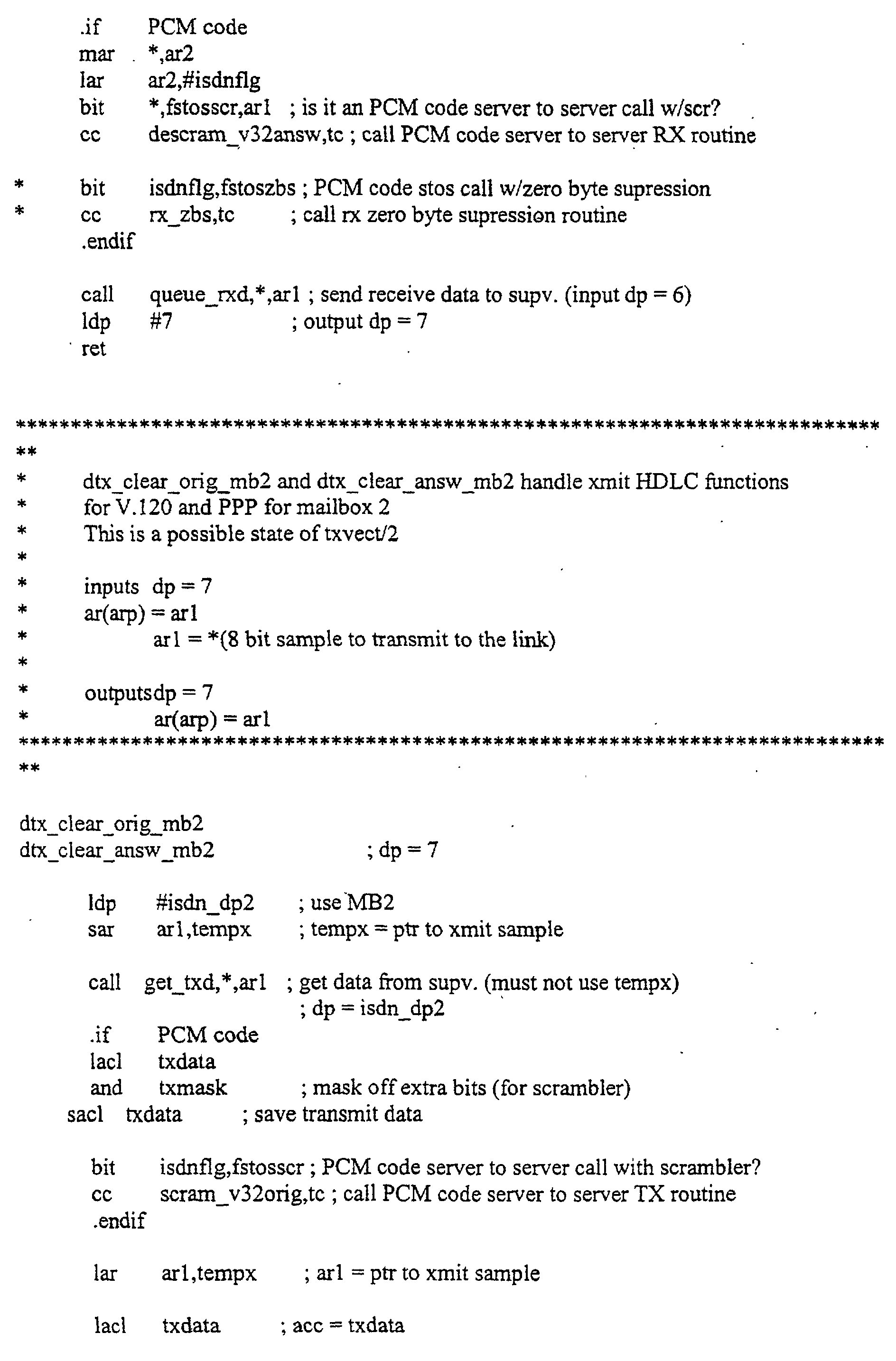

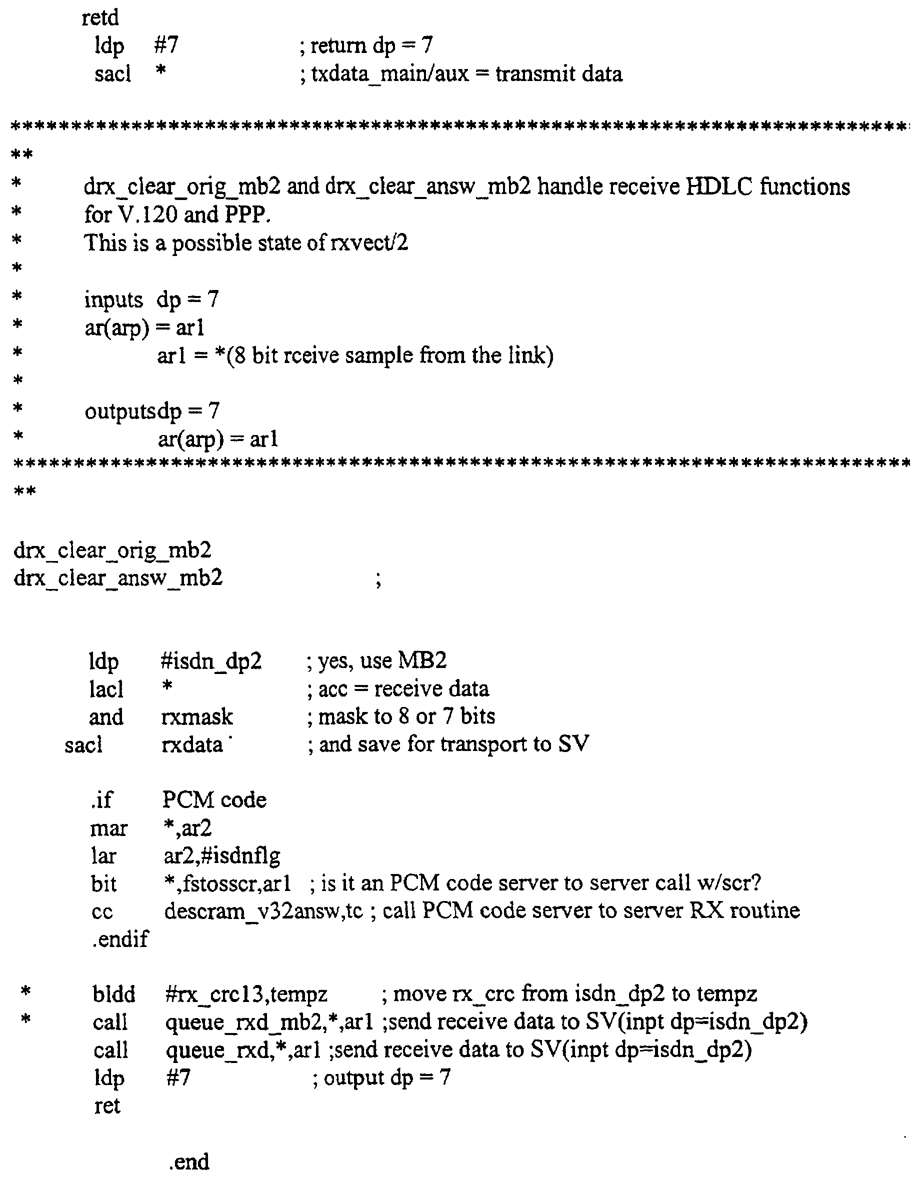

## Claims

1. A method for determining characteristics of a data communication channel between first and second data communication devices comprising, in combination:
sending a low power digital probe signal over said channel from said first to said second data communication devices;
sending a second digital probe signal corresponding to an analog signal having a high-frequency signal with a time-varying do component from said first to said second data communication devices; and
detecting a received signal at said second data communication device, said received signal corresponding to said probe signals sent by said first device, and determining whether said received signal varies from a predetermined standard.

2. A method as claimed in Claim 1, wherein said high frequency signal is greater than 3,300 Hertz.

3. A method as claimed in Claim 1, wherein said high frequency signal is equal to 4,000 Hertz.

4. A method as claimed in claim 1, wherein said high frequency signal has an amplitude of one-half of a maximum amplitude permitted for said channel.

5. A method as claimed in claim 1, wherein said probe signal is synchronized between said first and said second data communication device.

6. A method as claimed in claim 5, wherein said probe signal includes a total number of bytes equaliy divisible by 6.

7. A method as claimed in claim 1 wherein said method further comprises sending a third, all-zero, probe signal.

8. A method as claimed in claim 1 wherein said step of determining whether said received signal varies from a predetermined standard includes determining whether robbed bit signaling has affected a probe signal.

9. A method as claimed in claim 8, wherein said step of determining whether said received signal varies from a predetermined standard further comprises at least one of: determining a number of robbed bits, and determining a location of a robbed bit.

10. A method as claimed in claim 1 wherein said step of determining whether said received signal varies from a predetermined standard includes determining whether digital ones have been inserted in a probe signal.

11. A method as claimed in claim 1 wherein said step of determining whether said received signal varies from a predetermined standard includes determining whether a probe signal has passed through a digital pad.

12. A method as claimed in claim 1 wherein said step of determining whether said received signal varies from a predetermined standard includes monitoring said received signal for a digital signal corresponding to an analog signal having a high-frequency signal with a time-varying dc component

13. A method as claimed in claim 1, wherein said second probe signal comprises a sequence of digital codewords.

14. A method as claimed in claim 13, wherein said sequence of digital codewords comprises 256 distinct codewords.

15. A method as claimed in claim 14, wherein said 256 distinct codewords correspond to a series of levels associated with a 256 level quantizer.

16. A method as claimed in claim 1, wherein said low power digital probe signal is of sufficient length so that an average power of at least said low power digital probe signal and said second digital probe signal is less than a predetermined threshold.

## Patentansprüche

1. Verfahren zum Bestimmen der Charakteristika eines Datenkommunikationskanals zwischen ersten und zweiten Datenkommunikationsvorrichtungen, umfassend, in Kombination:
Senden eines digitalen Prüfsignals geringer Leistung über den genannten Kanal von der genannten ersten zu der genannten zweiten Datenkommunikationsvorrichtung;
Senden eines zweiten digitalen Prüfsignals entsprechend einem analogen Signal, das ein Hochfrequenzsignal mit einer zeitveränderlichen Gleichspannungskomponente aufweist, von der genannten ersten an die genannte zweite Datenkommunikationsvorrichtung; und
Detektieren eines empfangenen Signals bei der genannten zweiten Datenkommunikationsvorrichtung, wobei das genannte empfangene Signal dem von der genannten ersten Vorrichtung gesandten Prüfsignal entspricht, und Bestimmen, ob das genannte empfangene Signal von einem vorbestimmten Standard abweicht.

2. Verfahren nach Anspruch 1, bei dem das genannte Hochfrequenzsignal größer als 3300 Hertz ist.

3. Verfahren nach Anspruch 1, bei dem das genannte Hochfrequenzsignal eine Frequenz von 4000 Hertz aufweist.

4. Verfahren nach Anspruch 1, bei dem das genannte Hochfrequenzsignal eine Amplitude in der Größe der Hälfte einer für den genannten Kanal zugelassenen maximalen Amplitude aufweist.

5. Verfahren nach Anspruch 1, bei dem das genannte Prüfsignal zwischen der genannten ersten und der genannten zweiten Datenkommunikationsvorrichtung synchronisiert ist.

6. Verfahren nach Anspruch 5, bei dem das genannte Prüfsignal eine Gesamtzahl von Bytes enthält, die gleichmäßig durch 6 teilbar ist.

7. Verfahren nach Anspruch 1, bei dem das genannte Verfahren weiter das Senden eines dritten Dauernull-Prüfsignals umfasst.

8. Verfahren nach Anspruch 1, bei dem der genannte Schritt des Bestimmens darüber, ob das genannte empfangene Signal von einem vorbestimmten Standard abweicht, das Bestimmen einschließt, ob eine "robbed Bit"-Zeichengabe ein Prüfsignal beeinflusst hat.

9. Verfahren nach Anspruch 8, bei dem der genannte Schritt des Bestimmens darüber, ob das genannte empfangene Signal von einem vorbestimmten Standard abweicht, weiter mindestens eines von beiden umfasst: das Bestimmen einer Anzahl von "robbed Bits" und das Bestimmen einer Stelle eines "robbed Bits".

10. Verfahren nach Anspruch 1, bei dem der genannte Schritt des Bestimmens darüber, ob das genannte empfangene Signal von einem vorbestimmten Standard abweicht, das Bestimmen darüber umfasst, ob digitale Einsen in ein Prüfsignal eingefügt worden sind.

11. Verfahren nach Anspruch 1, bei dem der genannte Schritt des Bestimmens darüber, ob das genannte empfangene Signal von einem vorbestimmten Standard abweicht, das Bestimmen darüber umfasst, ob ein Prüfsignal ein digitales Pad durchlaufen hat.

12. Verfahren nach Anspruch 1, bei dem der genannte Schritt des Bestimmens darüber, ob das genannte empfangene Signal von einem vorbestimmten Standard abweicht, das Überwachen des empfangenen Signals in Bezug auf ein digitales Signal umfasst, das einem analogen Signal entspricht, welches ein Hochfrequenzsignal mit einer zeitveränderlichen Gleichspannungskomponente aufweist.

13. Verfahren nach Anspruch 1, bei dem das genannte zweite Prüfsignal eine Sequenz von digitalen Codewörtern umfasst.

14. Verfahren nach Anspruch 13, bei dem die genannte Sequenz von digitalen Codewörtern 256 unterschiedliche Codewörter umfasst.

15. Verfahren nach Anspruch 14, bei dem die genannten 256 unterschiedlichen Codewörter einer Serie von Stufen entsprechen, die einem Quantisierer von 256 Stufen zugeordnet sind.

16. Verfahren nach Anspruch 1, bei dem das genannte digitale Prüfsignal geringer Leistung eine ausreichende Länge besitzt, so dass eine Durchschnittsleistung von mindestens dem genannten digitalen Prüfsignal geringer Leistung und dem genannten zweiten digitalen Prüfsignal kleiner als ein vorbestimmter Schwellenwert ist.

## Revendications

1. Procédé pour déterminer les caractéristiques d'un canal de communication de données entre des premier et deuxième dispositifs de communication de données, comprenant, en combinaison, les étapes consistant à :
envoyer un signal d'essai numérique faible puissance sur ledit canal dudit premier audit deuxième dispositifs de communication de données;
envoyer un deuxième signal d'essai numérique correspondant à un signal analogique ayant un signal haute fréquence avec une composante continue variant dans le temps dudit premier audit deuxième dispositifs de communication de données; et
détecter un signal reçu audit deuxième dispositif de communication de données, ledit signal reçu correspondant auxdits signaux d'essai envoyés par ledit premier dispositif, et déterminer si ledit signal reçu varie par rapport à une norme prédéterminée.

2. Procédé selon la revendication 1, dans lequel ledit signal haute fréquence est supérieur à 3300 Hertz.

3. Procédé selon la revendication 1, dans lequel ledit signal haute fréquence est égal à 4000 Hertz.

4. Procédé selon la revendication 1, dans lequel ledit signal haute fréquence a une amplitude de la moitié d'une amplitude maximale autorisée pour ledit canal.

5. Procédé selon la revendication 1, dans lequel ledit signal d'essai est synchronisé entre ledit premier et ledit deuxième dispositif de communication de données.

6. Procédé selon la revendication 5, dans lequel ledit signal d'essai inclut un nombre total d'octets divisible en 6 parts égales.

7. Procédé selon la revendication 1, dans lequel ledit procédé comprend en outre l'envoi d'un troisième signal d'essai composé entièrement de zéros.

8. Procédé selon la revendication 1, dans lequel ladite étape consistant à déterminer si ledit signal reçu varie par rapport à une norme prédéterminée inclut l'étape consistant à déterminer si la signalisation de bits volés a affecté un signal d'essai.

9. Procédé selon la revendication 8, dans lequel ladite étape consistant à déterminer si ledit signal reçu varie par rapport à une norme prédéterminée comprend en outre au moins une étape consistant à déterminer un nombre de bits volés, et à déterminer un emplacement d'un bit volé.

10. Procédé selon la revendication 1, dans lequel ladite étape consistant à déterminer si ledit signal reçu varie par rapport à une norme prédéterminée inclut une étape consistant à déterminer si des uns numériques ont été insérés dans un signal d'essai.

11. Procédé selon la revendication 1, dans lequel ladite étape consistant à déterminer si ledit signal reçu varie par rapport à une norme prédéterminée inclut l'étape consistant à déterminer si un signal d'essai est passé par un atténuateur numérique.

12. Procédé selon la revendication 1, dans lequel ladite étape consistant à déterminer si ledit signal reçu varie par rapport à une norme prédéterminée inclut l'étape consistant à scruter ledit signal reçu à la recherche d'un signal numérique correspondant à un signal analogique comportant un signal haute fréquence avec une composante continue variant dans le temps.

13. Procédé selon la revendication 1, dans lequel ledit deuxième signal d'essai comprend une séquence de mots de code numériques.

14. Procédé selon la revendication 13, dans lequel ladite séquence de mots de code numériques comprend 256 mots de code distincts.

15. Procédé selon la revendication 14, dans lequel lesdits 256 mots de code distincts correspondent à une série de niveaux associés à un quantificateur de 256 niveaux.

16. Procédé selon la revendication 1, dans lequel ledit signal d'essai numérique faible puissance est d'une longueur suffisante de sorte qu'une puissance moyenne au moins dudit signal d'essai numérique faible puissance et dudit deuxième signal d'essai numérique est inférieure à un seuil prédéterminé.
